# EUROPEAN PATENT SPECIFICATION

(11) **EP 2 628 271 B1**
(45) Date of publication and mention of the grant of the patent: **10.09.2014**
(21) Application number: 11781681.9
(22) Date of filing: 12.10.2011
(51) Int. Cl.: H04L 12/10, H04W 52/02, H04W 88/08, H04W 88/12

(54) **LOCAL POWER MANAGEMENT FOR REMOTE ANTENNA UNITS IN DISTRIBUTED ANTENNA SYSTEMS**
LOKALE ENERGIEVERWALTUNG FÜR ABGESETZTE ANTENNEN IN VERTEILTEN ANTENNENSYSTEMEN
GESTION DE PUISSANCE LOCALE POUR UNITÉS D'ANTENNE DISTANTES DANS DES SYSTÈMES D'ANTENNE DISTRIBUÉE

(30) Priority: 13.10.2010 US 392660 P
(43) Date of publication of application: 21.08.2013
(73) Proprietor: CCS Technology, Inc., Corning, New York 14831 (US)
(72) Inventor: HEIDLER, Christian, 82069 Hohenschaeftlarn (DE); HULL, Jonathan R, Baldwinsville, New York 13027 (US); KEDZIORA, Jessica Joy, Mannsville, New York 13661 (US); SAUER, Michael, Corning, New York 14830 (US); SCHWEIKER, Wolfgang, 83629 Weyarn (DE)
(74) Representative: Epping - Hermann - Fischer
(86) International application number: PCT/US2011/055858
(87) International publication number: WO 2012/051227

(56) References cited:
- WO-A1-2005/117337
- WO-A1-2006/077569
- WO-A1-2009/014710
- WO-A1-2009/145789
- KR-A- 20040 053 467
- US-A1- 2006 053 324

## Description

### BACKGROUND

### Field of the Disclosure

The technology of the disclosure relates to power management in remote antenna units in distributed antenna systems for distributing radio frequency (RF) signals to the remote antenna units.

### Technical Background

Wireless communication is rapidly growing, with ever-increasing demands for high-speed mobile data communication. As an example, so-called "wireless fidelity" or "WiFi" systems and wireless local area networks (WLANs) are being deployed in many different types of areas (e.g., coffee shops, airports, libraries, etc.). Distributed antenna systems communicate with wireless devices called "clients," which must reside within the wireless range or "cell coverage area" in order to communicate with an access point device.

One approach to deploying a distributed antenna system involves the use of radio frequency (RF) antenna coverage areas, also referred to as "antenna coverage areas." The antenna coverage areas are provided by remote antenna units in the distributed antenna system. Remote antenna units can provide antenna coverage areas having radii in the range from a few meters up to twenty (20) meters as an example. If the antenna coverage areas provided each cover a small area, there are typically only a few users (clients) per antenna coverage area. This allows for minimizing the amount of RF bandwidth shared among the wireless system users. It may be desirable to provide antenna coverage areas in a building or other facility to provide indoor distributed antenna system access to clients within the building or facility. It may also be desirable to employ optical fiber to distribute RF communications signals to provide an optical fiber-based distributed antenna system. Distribution of RF communications signals over optical fiber can include Radio-over-Fiber (RoF) distribution. Benefits of optical fiber include increased bandwidth.

Remote antenna units may contain power-consuming circuits and other components that are involved in processing RF communications signals. For example, remote antenna units provided in an optical-fiber based distributed antenna system may include electrical-to-optical (E/O) converters and optical-to-electrical (O/E) converters that require power to operate. The E/O and O/E converters convert downlink optical RF communications signals to downlink electrical RF communications signals and uplink electrical RF communications signals to uplink optical RF communications signals, respectively. Other power-consuming components may be included in the remote antenna unit. A local power source can be provided at the remote antenna units to supply power to power-consuming components in the remote antenna units. Alternatively, to avoid providing a local power source, a remote power source can be provided that provides power over power lines routed to the remote antenna units. The power lines may be provided in separate cabling or bundled in a hybrid cable with communications lines routed to the remote antenna units.

It is important that a sufficient amount of power be provided to the remote antenna unit to properly power the power-consuming components provided therein. Otherwise, the power-consuming components in the remote antenna unit may not properly operate and may not provide intended services for the distributed antenna system. In the case of multiple power-consuming components provided in a remote antenna unit, power provided to the remote antenna unit is split among the multiple components. In this case, it is also important that the power be managed to sufficiently power each of the power-consuming components.

WO 2009/145789 A1 discloses a wireless access point (WAP) device which includes a WAP electronics section and an internal power supply. The internal power supply can be connected to an AC mains by a power input cable, while the WAP electronics section can be connected to a Power over Ethernet (PoE) network. The WAP electronics section may receive power from the internal power supply and may optionally receive power from the network, if PoE is available. A portable information device is a wireless client of the WAP device and may receive power from the internal power supply section of the WAP device via a power output cable that connects the WAP device with the portable information device.

WO 2006/077569 A1 discloses a system for rack level power management. A centralized management module allocates a power budget for each of the modules of the rack system, and the power managers of the power managed modules operate to control module operation so that the power drawn is within the allocated budget. The centralized power management entity is operative to assign a power budget for the minimum required power for each module, and only in the event that additional power is available, to allocate a power budget for the additional power level.

### SUMMARY OF THE DETAILED DESCRIPTION

Embodiments disclosed in the detailed description include power management for a remote antenna unit(s) (RAUs) in a distributed antenna system, and related devices, systems, methods, and computer-readable media. The distributed antenna system may distribute radio frequency (RF) communications signals to RAUs for communicating to client devices. As a non-limiting example, the distributed antenna system may be an optical fiber-based distributed antenna system. Power can be managed for an RAU configured to power modules and devices that may require more power to operate than power available to the RAU. For example, the RAU may be configured to include power-consuming RAU modules to provide distributed antenna system-related services. As another example, the RAU may be configured to provide power to external power-consuming devices through powered ports in the RAU. Depending on the configuration of the RAU, the power-consuming RAU modules and/or external power-consuming devices may demand more power than is available at the RAU. In this instance, the power available at the RAU can be distributed to the power-consuming modules and devices based on the priority of services desired to be provided by the RAU.

In one embodiment, an RAU for a distributed antenna system is provided. The RAU comprises at least one power-consuming RAU module. As non-limiting examples, the at least one power-consuming RAU module may be comprised of at least one of an RF communications module configured to provide RF communications services, and a digital data services (DDS) module configured to provide DDS. The RAU further comprises at least one powered port configured to provide power to at least one external power-consuming device connected to the at least one powered port. The RAU also comprises a controller. The controller is configured to determine an available power budget for the at least one powered port. The controller is also configured to enable power for the at least one powered port if the available power budget is sufficient to power the at least one external power-consuming device connected to the at least one powered port.

In another embodiment, a method of managing power consumed at an RAU in a distributed antenna system is provided. The method comprises determining an available power budget for at least one powered port configured to provide power to at least one external power-consuming device connected to the at least one powered port based on power required by at least one power-consuming RAU module. As non-limiting examples, the at least one power-consuming RAU module may be comprised of at least one of an RF communications module configured to provide RF communications services, and a digital data services (DDS) module configured to provide DDS. The method also comprises enabling power for the at least one powered port if an available power budget is sufficient to power the at least one external power-consuming device connected to the at least one powered port.

In another embodiment, a computer-readable medium is provided. The computer-readable medium stores one or more programs, the one or more programs comprising instructions, which when executed by a controller in an RAU provided in a distributed antenna system, cause the controller to determine an available power budget for at least one powered port in an RAU provided in a distributed antenna system, the RAU configured to provide power to at least one external power-consuming device connected to the at least one powered port based on power required by at least one power-consuming RAU module. As non-limiting examples, the at least one power-consuming RAU module may be comprised of at least one of an RF communications module configured to provide RF communications services, and a digital data services (DDS) module configured to provide DDS. The instructions further cause the controller to enable power for the at least one powered port if an available power budget is sufficient to power the at least one external power-consuming device connected to the at least one powered port.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a schematic diagram of an exemplary distributed antenna system;
**FIG. 2** is a more detailed schematic diagram of exemplary head-end equipment and a remote antenna unit (RAU) that can be deployed in the distributed antenna system of FIG. 1;
**FIG. 3** is a partially schematic cut-away diagram of an exemplary building infrastructure in which the distributed antenna system in **FIG. 1** can be employed;
**FIG. 4** is a schematic diagram of another exemplary distributed antenna system;
**FIG. 5** is a schematic diagram of an exemplary embodiment of providing digital data services to RAUs in a distributed antenna system;
**FIG. 6** is a schematic diagram of an exemplary RAU configured with power-consuming components for providing radio frequency (RF) communications services, digital data services, external power to digital data service devices, and a remote expansion unit;
**FIG. 7** is an exemplary priority scheme for providing power to power-consuming components that may be present in an RAU;
**FIG. 8** is a schematic diagram of an exemplary RAU that includes a component(s) for providing local power management of power provided to power-consuming modules and external power-consuming devices connected to the RAU;
**FIG. 9** is a flowchart illustrating an exemplary process for measuring power consumed by the RAU and generating a load sense signal indicative of the power consumed by the RAU for providing local power management;
**FIG. 10** is a flowchart illustrating an exemplary process for providing local power management of power provided to external power-consuming devices connected to the RAU;
**FIG. 11** is a schematic diagram illustrating an exemplary relationship between power degradation as a function of cable length;
**FIG. 12** is a schematic diagram illustrating an exemplary relationship between load voltage and available classes for external power-consuming devices connected to the RAU;
**FIG. 13** is a flowchart illustrating another exemplary process for providing local power management of power provided to external power-consuming devices connected to the RAU;
**FIG. 14** is an exemplary digital data services (DDS) module that can be provided in the RAU to provide digital data services at the RAU; and
**FIG. 15** is a schematic diagram of a generalized representation of an exemplary computer system that can be included in the RAU and/or a power-consuming RAU module, which is adapted to execute instructions from an exemplary computer-readable medium to perform the power management functions in the RAU.

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed in the detailed description include power management for a remote antenna unit(s) (RAUs) in a distributed antenna system, and related devices, systems, methods, and computer-readable media. The distributed antenna system may distribute radio frequency (RF) communications signals to RAUs for communicating to client devices. As a non-limiting example, the distributed antenna system may be an optical fiber-based distributed antenna system. Power can be managed for an RAU configured to power modules and devices that may require more power to operate than power available to the RAU. For example, the RAU may be configured to include power-consuming RAU modules to provide distributed antenna system related services. As another example, the RAU may be configured to provide power to external power-consuming devices through powered ports in the RAU. Depending on the configuration of the RAU, the power-consuming RAU modules and/or external power-consuming devices may demand more power than is available at the RAU. In this instance, the power available at the RAU can be distributed to the power-consuming modules and devices based on the priority of services desired to be provided by the RAU.

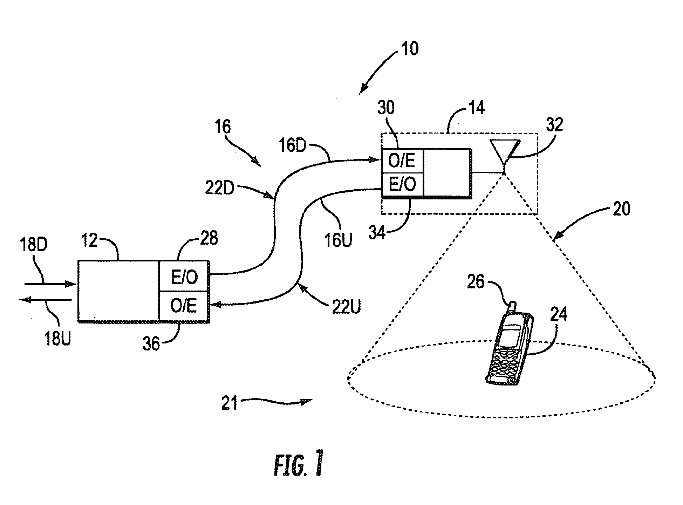

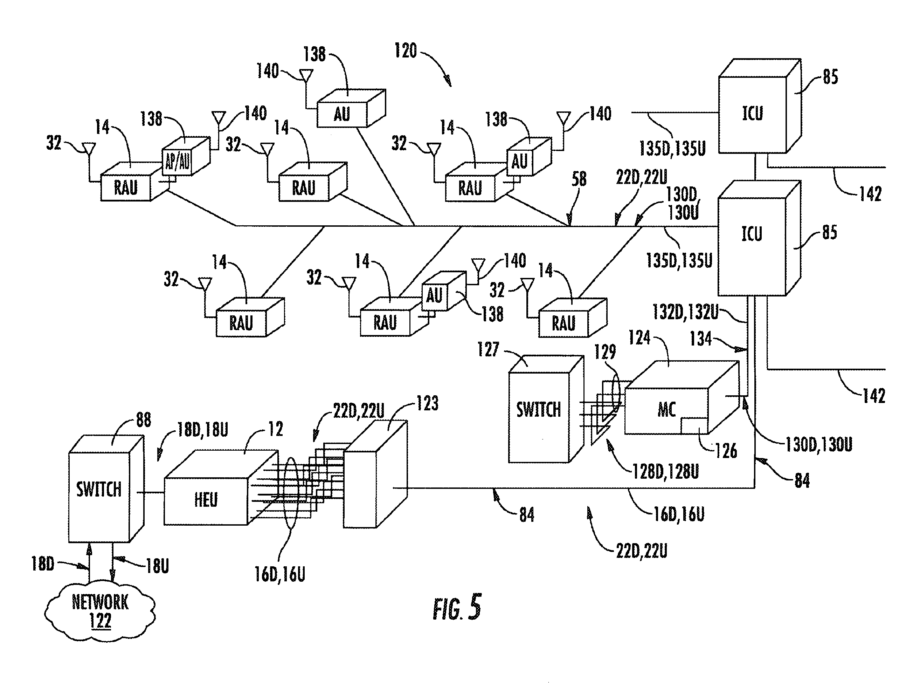

Before discussing power management for RAUs provided in distributed antenna systems and related components and methods starting at **FIG. 5****,** **FIGS. 1-4** are provided and first discussed below. **FIGS. 1-4** provide examples of distributed antenna systems, including those according to the embodiments described herein.

**FIG. 1** is a schematic diagram of an exemplary distributed antenna system. In this embodiment, the distributed antenna system is an optical fiber-based distributed antenna system **10;** however, other types of distributed antenna systems are also possible. The optical fiber-based distributed antenna system **10** is configured to create one or more antenna coverage areas for establishing communications with wireless client devices located in the RF range of the antenna coverage areas. The optical fiber-based distributed antenna system **10** provides RF communications services (e.g., cellular services). In this embodiment, the optical fiber-based distributed antenna system **10** includes head end equipment in the form of a head-end unit (HEU) **12,** one or more remote antenna units (RAUs) **14,** and an optical fiber **16** that optically couples the HEU **12** to the RAU **14.** The HEU **12** is configured to receive communications over downlink electrical RF communications signals **18D** from a source or sources, such as a network or carrier as examples, and provide such communications to the RAU **14.** The HEU **12** is also configured to return communications received from the RAU **14,** via uplink electrical RF communications signals **18U,** back to the source or sources. In this regard in this embodiment, the optical fiber **16** includes at least one downlink optical fiber **16D** to carry signals communicated from the HEU **12** to the RAU **14** and at least one uplink optical fiber **16U** to carry signals communicated from the RAU **14** back to the HEU **12.**

The optical fiber-based distributed antenna system **10** has an antenna coverage area **20** that can be substantially centered about the RAU **14.** The antenna coverage area **20** of the RAU **14** forms an RF coverage area **21.** The HEU **12** is adapted to perform or to facilitate any one of a number of Radio-over-Fiber (RoF) applications, such as radio frequency identification (RFID), wireless local-area network (WLAN) communication, or cellular phone service. Shown within the antenna coverage area **20** is a client device **24** in the form of a mobile device as an example, which may be a cellular telephone as an example. The client device **24** can be any device that is capable of receiving RF communications signals. The client device **24** includes an antenna **26** (e.g., a wireless card) adapted to receive and/or send electromagnetic RF communications signals.

With continuing reference to **FIG. 1****,** to communicate the electrical RF communications signals over the downlink optical fiber **16D** to the RAU **14,** to in turn be communicated to the client device **24** in the antenna coverage area **20** formed by the RAU **14,** the HEU **12** includes an electrical-to-optical (E/O) converter **28.** The E/O converter **28** converts the downlink electrical RF communications signals **18D** to downlink optical RF communications signals **22D** to be communicated over the downlink optical fiber **16D.** The RAU **14** includes an optical-to-electrical (O/E) converter **30** to convert received downlink optical RF communications signals **22D** back to electrical RF communications signals to be communicated wirelessly through an antenna **32** of the RAU **14** to client devices **24** located in the antenna coverage area **20.**

Similarly, the antenna **32** is also configured to receive wireless RF communications from client devices **24** in the antenna coverage area **20.** In this regard, the antenna **32** receives wireless RF communications from client devices **24** and communicates electrical RF communications signals representing the wireless RF communications to an E/O converter **34** in the RAU **14.** The E/O converter **34** converts the electrical RF communications signals into uplink optical RF communications signals **22U** to be communicated over the uplink optical fiber **16U.** An O/E converter **36** provided in the HEU **12** converts the uplink optical RF communications signals **22U** into uplink electrical RF communications signals, which can then be communicated as uplink electrical RF communications signals **18U** back to a network or other source. The HEU **12** in this embodiment is not able to distinguish the location of the client device **24** in this embodiment. The client device **24** could be in the range of any antenna coverage area **20** formed by an RAU **14.**

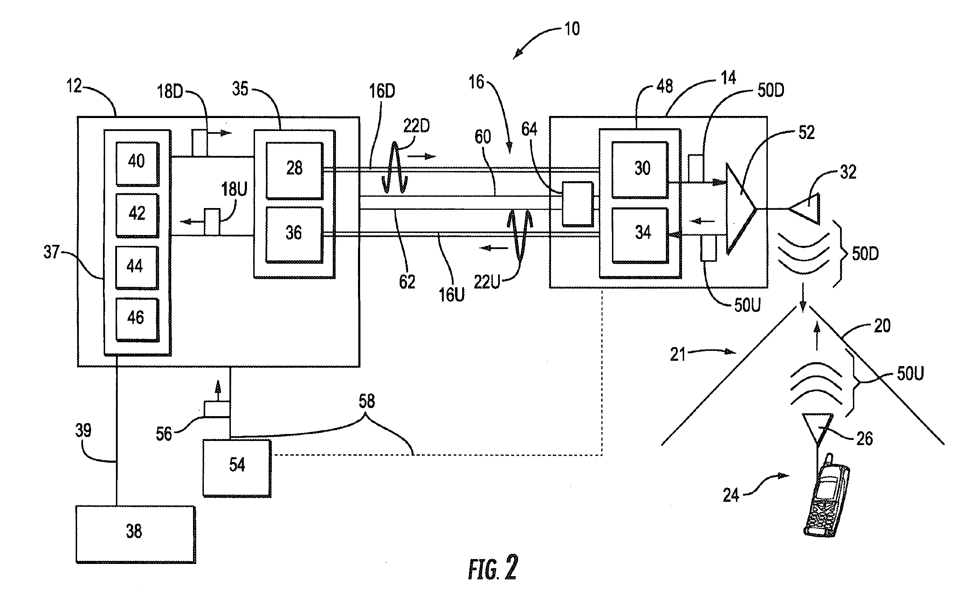

**FIG. 2** is a more detailed schematic diagram of the exemplary optical fiber-based distributed antenna system **10** of **FIG. 1** that provides electrical RF service signals for a particular RF service or application. In an exemplary embodiment, the HEU **12** includes a service unit **37** that provides electrical RF service signals by passing (or conditioning and then passing) such signals from one or more outside networks **38** via a network link **39.** In a particular example embodiment, this includes providing WLAN signal distribution as specified in the Institute of Electrical and Electronics Engineers (IEEE) 802.11 standard, i.e., in the frequency range from 2.4 to 2.5 GigaHertz (GHz) and from 5.0 to 6.0 GHz. Any other electrical RF communications signal frequencies are possible. In another exemplary embodiment, the service unit **37** provides electrical RF service signals by generating the signals directly. In another exemplary embodiment, the service unit **37** coordinates the delivery of the electrical RF service signals between client devices **24** within the antenna coverage area **20.**

With continuing reference to **FIG. 2****,** the service unit **37** is electrically coupled to the E/O converter **28** that receives the downlink electrical RF communications signals **18D** from the service unit **37** and converts them to corresponding downlink optical RF communications signals **22D.** In an exemplary embodiment, the E/O converter **28** includes a laser suitable for delivering sufficient dynamic range for the RoF applications described herein, and optionally includes a laser driver/amplifier electrically coupled to the laser. Examples of suitable lasers for the E/O converter **28** include, but are not limited to, laser diodes, distributed feedback (DFB) lasers, Fabry-Perot (FP) lasers, and vertical cavity surface emitting lasers (VCSELs).

With continuing reference to **FIG. 2****,** the HEU **12** also includes the O/E converter **36,** which is electrically coupled to the service unit **37.** The O/E converter **36** receives the uplink optical RF communications signals **22U** and converts them to corresponding uplink electrical RF communications signals **18U.** In an example embodiment, the O/E converter **36** is a photodetector, or a photodetector electrically coupled to a linear amplifier. The E/O converter **28** and the O/E converter **36** constitute a "converter pair" **35,** as illustrated in **FIG. 2****.**

In accordance with an exemplary embodiment, the service unit **37** in the HEU **12** can include an RF communications signal conditioner unit **40** for conditioning the downlink electrical RF communications signals **18D** and the uplink electrical RF communications signals **18U,** respectively. The service unit **37** can include a digital signal processing unit ("digital signal processor") **42** for providing to the RF communications signal conditioner unit **40** an electrical signal that is modulated onto an RF carrier to generate a desired downlink electrical RF communications signal **18D.** The digital signal processor **42** is also configured to process a demodulation signal provided by the demodulation of the uplink electrical RF communications signal **18U** by the RF communications signal conditioner unit **40.** The service unit **37** in the HEU **12** can also include an optional head-end unit controller (HEC) **44** (or "controller **44**") for processing data and otherwise performing logic and computing operations, and a memory unit **46** for storing data, such as data to be transmitted over a WLAN or other network for example.

With continuing reference to **FIG. 2****,** the RAU **14** also includes a converter pair **48** comprising the O/E converter **30** and the E/O converter **34.** The O/E converter **30** converts the received downlink optical RF communications signals **22D** from the HEU **12** back into downlink electrical RF communications signals **50D.** The E/O converter **34** converts uplink electrical RF communications signals **50U** received from the client device **24** into the uplink optical RF communications signals **22U** to be communicated to the HEU **12.** The O/E converter **30** and the E/O converter **34** are electrically coupled to the antenna **32** via an RF signal-directing element **52,** such as a circulator for example. The RF signal-directing element **52** serves to direct the downlink electrical RF communications signals **50D** and the uplink electrical RF communications signals **50U,** as discussed below. In accordance with an exemplary embodiment, the antenna **32** can include any type of antenna, including but not limited to one or more patch antennas, such as disclosed in U.S. Patent Application Serial No. 11/504,999, filed August 16, 2006, entitled "Radio-over-Fiber Transponder With A Dual-Band Patch Antenna System," and U.S. Patent Application Serial No. 11/451,553, filed June 12, 2006, entitled "Centralized Optical Fiber-based Wireless Picocellular Systems and Methods," both of which are incorporated herein by reference in their entireties.

With continuing reference to **FIG. 2****,** the optical fiber-based distributed antenna system **10** also includes a power supply **54** that provides an electrical power signal **56.** The power supply **54** is electrically coupled to the HEU **12** for powering the power-consuming elements therein. In an exemplary embodiment, an electrical power line **58** runs through the HEU **12** and over to the RAU **14** to power the O/E converter **30** and the E/O converter **34** in the converter pair **48,** the optional RF signal-directing element **52** (unless the RF signal-directing element **52** is a passive device such as a circulator for example), and any other power-consuming elements provided. In an exemplary embodiment, the electrical power line **58** includes two wires **60** and **62** that carry a single voltage and that are electrically coupled to a DC power converter **64** at the RAU **14.** The DC power converter **64** is electrically coupled to the O/E converter **30** and the E/O converter **34** in the converter pair **48,** and changes the voltage or levels of the electrical power signal **56** to the power level(s) required by the power-consuming components in the RAU **14.** In an exemplary embodiment, the DC power converter **64** is either a DC/DC power converter or an AC/DC power converter, depending on the type of electrical power signal **56** carried by the electrical power line **58.** In another example embodiment, the electrical power line **58** (dashed line) runs directly from the power supply **54** to the RAU **14** rather than from or through the HEU **12.** In another example embodiment, the electrical power line **58** includes more than two wires and may carry multiple voltages.

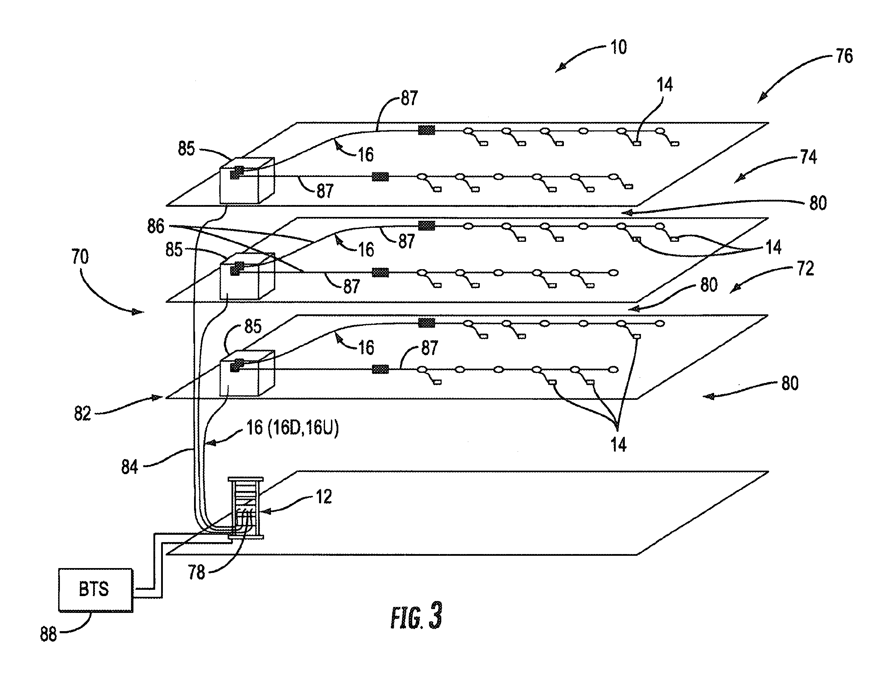

To provide further exemplary illustration of how an optical fiber-based distributed antenna system can be deployed indoors, **FIG. 3** is provided. **FIG. 3** is a partially schematic cut-away diagram of a building infrastructure **70** employing an optical fiber-based distributed antenna system. The system may be the optical fiber-based distributed antenna system **10** of **FIGS. 1** and **2****.** The building infrastructure **70** generally represents any type of building in which the optical fiber-based distributed antenna system **10** can be deployed. As previously discussed with regard to **FIGS. 1** and **2****,** the optical fiber-based distributed antenna system **10** incorporates the HEU **12** to provide various types of communications services to coverage areas within the building infrastructure **70,** as an example. For example, as discussed in more detail below, the optical fiber-based distributed antenna system **10 in** this embodiment is configured to receive wireless RF communications signals and convert the RF communications signals into RoF signals to be communicated over the optical fiber **16** to multiple RAUs **14.** The optical fiber-based distributed antenna system **10** in this embodiment can be, for example, an indoor distributed antenna system (IDAS) to provide wireless service inside the building infrastructure **70.** These wireless signals can include cellular service, wireless services such as RFID tracking, Wireless Fidelity (WiFi), local area network (LAN), WLAN, and combinations thereof, as examples.

With continuing reference to **FIG. 3****,** the building infrastructure **70** in this embodiment includes a first (ground) floor **72,** a second floor **74,** and a third floor **76.** The floors **72, 74, 76** are serviced by the HEU **12** through a main distribution frame **78** to provide antenna coverage areas **80** in the building infrastructure **70.** Only the ceilings of the floors **72, 74, 76** are shown in **FIG. 3** for simplicity of illustration. In the example embodiment, a main cable **82** has a number of different sections that facilitate the placement of a large number of RAUs **14** in the building infrastructure **70.** Each RAU **14** in turn services its own coverage area in the antenna coverage areas **80.** The main cable **82** can include, for example, a riser cable **84** that carries all of the downlink and uplink optical fibers **16D, 16U** to and from the HEU **12.** The riser cable **84** may be routed through an interconnect unit (ICU) **85.** The ICU **85** may be provided as part of or separate from the power supply **54** in **FIG. 2****.** The ICU **85** may also be configured to provide power to the RAUs **14** via the electrical power line **58,** as illustrated in **FIG. 2** and discussed above, provided inside an array cable **87,** or tail cable or home-run tether cable as other examples, and distributed with the downlink and uplink optical fibers **16D, 16U** to the RAUs **14.** The main cable **82** can include one or more multi-cable (MC) connectors adapted to connect select downlink and uplink optical fibers **16D, 16U,** along with an electrical power line, to a number of optical fiber cables **86.**

The main cable **82** enables the multiple optical fiber cables **86** to be distributed throughout the building infrastructure **70** (e.g., fixed to the ceilings or other support surfaces of each floor **72, 74, 76**) to provide the antenna coverage areas **80** for the first, second, and third floors **72, 74,** and **76.** In an example embodiment, the HEU **12** is located within the building infrastructure **70** (e.g., in a closet or control room), while in another example embodiment, the HEU **12** may be located outside of the building infrastructure **70** at a remote location. A base transceiver station (BTS) **88,** which may be provided by a second party such as a cellular service provider, is connected to the HEU **12,** and can be co-located or located remotely from the HEU **12.** A BTS is any station or source that provides an input signal to the HEU **12** and can receive a return signal from the HEU **12.** In a typical cellular system, for example, a plurality of BTSs are deployed at a plurality of remote locations to provide wireless telephone coverage. Each BTS serves a corresponding cell, and when a mobile client device enters the cell, the BTS communicates with the mobile client device. Each BTS can include at least one radio transceiver for enabling communication with one or more subscriber units operating within the associated cell. As another example, wireless repeaters or bi-directional amplifiers could also be used to serve a corresponding cell in lieu of a BTS. Alternatively, radio input could be provided by a repeater or picocell as other examples.

The optical fiber-based distributed antenna system **10** in **FIGS. 1-3** and described above provides point-to-point communications between the HEU **12** and the RAU **14.** Each RAU **14** communicates with the HEU **12** over a distinct downlink and uplink optical fiber pair to provide the point-to-point communications. Whenever an RAU **14** is installed in the optical fiber-based distributed antenna system **10,** the RAU **14** is connected to a distinct downlink and uplink optical fiber pair connected to the HEU **12.** The downlink and uplink optical fibers **16U, 16D** may be provided in a fiber optic cable. Multiple downlink and uplink optical fiber pairs can be provided in a fiber optic cable to service multiple RAUs **14** from a common fiber optic cable. For example, with reference to **FIG. 3****,** RAUs **14** installed on a given floor **72, 74,** or **76** may be serviced from the same optical fiber **16.** In this regard, the optical fiber **16** may have multiple nodes where distinct downlink and uplink optical fiber pairs can be connected to a given RAU **14.** One downlink optical fiber **16** could be provided to support multiple channels each using wavelength-division multiplexing (WDM), as discussed in U.S. Patent Application Serial Nos. 12/892,424 entitled "Providing Digital Data Services in Optical Fiber-Based Distributed Radio Frequency (RF) Communications Systems, and Related Components and Methods," incorporated herein by reference in its entirety. Other options for WDM and frequency-division multiplexing (FDM) are also disclosed in U.S. Patent Application Serial No. 12/892,424, any of which can be employed in any of the embodiments disclosed herein.

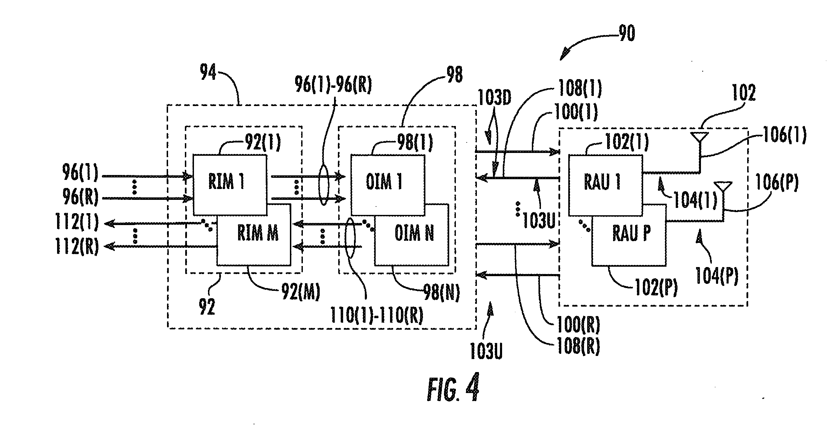

**FIG. 4** is a schematic diagram of another exemplary distributed antenna system **90.** In this embodiment, the distributed antenna system **90** is an optical fiber-based distributed antenna system comprised of three main components. One or more radio interfaces provided in the form of radio interface modules (RIMs) **92(1)-92(M)** in this embodiment are provided in an HEU **94** to receive and process downlink electrical RF communications signals **96(1)-96(R)** prior to optical conversion into downlink optical RF communications signals. The processing of the downlink electrical RF communications signals **96(1)-96(R)** can include any of the processing previously described above in the HEU **12** in **FIG. 2****.** The notations "1-R" and "1-M" indicate that any number of the referenced component, 1-R and 1-M, respectively, may be provided. As will be described in more detail below, the HEU **94** is configured to accept a plurality of RIMs **92(1)-92(M)** as modular components that can easily be installed and removed or replaced in the HEU **94.** In one embodiment, the HEU **94** is configured to support up to four (4) RIMs **92(1)-92(M)** as an example.

Each RIM **92(1)-92(M)** can be designed to support a particular type of radio source or range of radio sources (i.e., frequencies) to provide flexibility in configuring the HEU **94** and the optical fiber-based distributed antenna system **90** to support the desired radio sources. For example, one RIM **92** may be configured to support the Personal Communication Services (PCS) radio band. Another RIM **92** may be configured to support the 700 MHz radio band. In this example, by inclusion of these RIMs **92,** the HEU **94** would be configured to support and distribute RF communications signals on both PCS and LTE 700 radio bands. RIMs **92** may be provided in the HEU **94** that support any frequency bands desired, including but not limited to US Cellular band, PCS (Personal Communication Services) ban, AWS (Advanced Wireless Services) band, 700 MHz band, Global System for Mobile communications (GSM) 900, GSM 1800, UMTS. RIMs **92** may be provided in the HEU **94** that support any wireless technologies desired, including but not limited to CDMA (Code Division Multiple Access), CDMA200, 1xRTT, EV-DO (Evolution - Data Only), UMTS (Universal Mobile Telecommunication System), HSPA (High-speed Packet Access), GSM, GPRS (General Packet Radio Services), EDGE (Enhanced Data GSM Environment), TDMA (Time Division Multiple Access), LTE (Long Term Evolution), iDEN, and CDPD (Cellular Digital Packet Data).

RIMs **92** may be provided in the HEU **94** that support any frequencies desired, including but not limited to US FCC and Industry Canada frequencies (824-849MHz on uplink and 869-894MHz on downlink), US FCC and Industry Canada frequencies (1850 - 1915 MHz on uplink and 1930-1995 MHz on downlink), US FCC and Industry Canada frequencies (1710-1755 MHz on uplink and 2110 - 2155 MHz on downlink), US FCC frequencies (698-716MHz and 776-787MHz on uplink and 728-746 MHz on downlink). EU R & TTE frequencies (880-915 MHz on uplink and 925-960 MHz on downlink), EU R & TTE frequencies (1710-1785 MHz on uplink and 1805-1880 MHz on downlink), EU R & TTE frequencies (1920-1980 MHz on uplink and 2110-2170 MHz on downlink), US FCC frequencies (806-824 MHz on uplink and 851-869 MHz on downlink), US FCC frequencies (896-901 MHz on uplink and 929-941 MHz on downlink), US FCC frequencies (793-805 MHz on uplink and 763-775 MHz on downlink), and US FCC frequencies (2495-2690 MHz on uplink and downlink).

The downlink electrical RF communications signals **96(1)-96(R)** are provided to a plurality of optical interfaces provided in the form of optical interface modules (OIMs) **98(1)-98(N)** in this embodiment to convert the downlink electrical RF communications signals **96(1)-96(N)** into downlink optical signals **100(1)-100(R).** The notation "1-N" indicates that any number of the referenced component 1-N may be provided. The OIMs **98** may be configured to provide one or more optical interface components (OICs) that contain O/E and E/O converters, as will be described in more detail below. The OIMs **98** support the radio bands that can be provided by the RIMs **92,** including the examples previously described above. Thus, in this embodiment, the OIMs **98** may support a radio band range from 400 MHz to 2700 MHz, as an example, so providing different types or models of OIMs **98** for narrower radio bands to support possibilities for different radio band-supported RIMs **92** provided in the HEU **94** is not required. Further, as an example, the OIMs **98s** may be optimized for sub-bands within the 400 MHz to 2700 MHz frequency range, such as 400 - 700 MHz, 700 MHz - 1 GHz, 1 GHz - 1.6 GHz, and 1.6 GHz - 2.7 GHz, as examples.

The OIMs **98(1)-98(N)** each include E/O converters to convert the downlink electrical RF communications signals **96(1)-96(R)** to downlink optical signals **100(1)-**100(R). The downlink optical signals **100(1)-100(R)** are communicated over downlink optical fiber(s) **103D** to a plurality of RAUs **102(1)-102(P).** The notation "1-P" indicates that any number of the referenced component 1-P may be provided. O/E converters provided in the RAUs **102(1)-102(P)** convert the downlink optical signals **100(1)-100(R)** back into downlink electrical RF communications signals **96(1)-96(R),** which are provided over links **104(1)-104(P)** coupled to antennas **106(1)-106(P)** in the RAUs **102(1)-102(P)** to client devices in the reception range of the antennas **106(1)-106(P).**

E/O converters are also provided in the RAUs **102(1)-102(P)** to convert uplink electrical RF communications signals received from client devices through the antennas **106(1)-106(P)** into uplink optical signals **108(1)-108(R)** to be communicated over uplink optical fibers **103U** to the OIMs **98(1)-98(N).** The OIMs **98(1)-98(N)** include O/E converters that convert the uplink optical signals **108(1)-108(R)** into uplink electrical RF communications signals **110(1)-110(R)** that are processed by the RIMs **92(1)-102(M)** and provided as uplink electrical RF communications signals **112(1)-112(R).**

It may be desirable to provide both digital data services and RF communications services for client devices. For example, it may be desirable to provide digital data services and RF communications services in the building infrastructure **70 (****FIG. 3****)** to client devices located therein. Wired and wireless devices may be located in the building infrastructure **70** that are configured to access digital data services. Examples of digital data services include, but are not limited to, Ethernet, WLAN, WiMax, WiFi, Digital Subscriber Line (DSL), and LTE, etc. Ethernet standards could be supported, including but not limited to 100 Megabits per second (Mbs) (i.e., fast Ethernet) or Gigabit (Gb) Ethernet, or ten Gigabit (10G) Ethernet. Examples of digital data devices include, but are not limited to, wired and wireless servers, wireless access points (WAPs), gateways, desktop computers, hubs, switches, remote radio heads (RRHs), baseband units (BBUs), and femtocells. A separate digital data services network can be provided to provide digital data services to digital data devices.

**FIG. 5** is a schematic diagram of an exemplary embodiment of providing digital data services over separate downlink and uplink optical fibers from RF communications services to RAUs in an optical fiber-based distributed antenna system **120.** The optical fiber-based distributed antenna system **120** is described as including some components provided in the optical fiber-based distributed antenna system **10** of **FIGS. 1-3****.** These common components are illustrated in **FIG. 5** with common element numbers with **FIGS. 1-3****.** However, note that the optical fiber-based distributed antenna system **120** could also employ other components, including those in the optical fiber-based distributed antenna system **90** in **FIG. 4****.**

As illustrated in **FIG. 5****,** the HEU **12** is provided. The HEU **12** receives the downlink electrical RF communications signals **18D** from the BTS **88.** As previously discussed, the HEU **12** converts the downlink electrical RF communications signals **18D** to downlink optical RF communications signals **22D** to be distributed to the RAUs **14.** The HEU **12** is also configured to convert the uplink optical RF communications signals **22U** received from the RAUs **14** into uplink electrical RF communications signals **18U** to be provided to the BTS **88** and onto a network **122** connected to the BTS **88.** A patch panel **123** may be provided to receive the downlink and uplink optical fibers **16D, 16U** configured to carry the downlink and uplink optical RF communications signals **22D, 22U.** The downlink and uplink optical fibers **16D, 16U** may be bundled together in one or more riser cables **84** and provided to one or more ICUs **85,** as previously discussed and illustrated in **FIG. 3****.**

To provide digital data services in the optical fiber-based distributed antenna system **120** in this embodiment, a digital data services controller (also referred to as "DDS controller") **124** in the form of a media converter in this example is provided. The DDS controller **124** can include only a media converter for provision media conversion functionality or can include additional functionality to facilitate digital data services. The DDS controller **124** is configured to provide digital data services over a communications link, interface, or other communications channel or line, which may be either wired, wireless, or a combination of both. The DDS controller **124** may include a housing configured to house digital media converters (DMCs) **126** to interface to a DDS switch **127** to support and provide digital data services. For example, the DDS switch **127** could be an Ethernet switch. The DDS switch **127** may be configured to provide Gigabit (Gb) Ethernet digital data service as an example. The DMCs **126** are configured to convert electrical digital signals to optical digital signals, and vice versa. The DMCs **126** may be configured for plug and play installation (i.e., installation and operability without user configuration required) into the DDS controller **124.** For example, the DMCs **126** may include Ethernet input connectors or adapters (e.g., RJ-45) and optical fiber output connectors or adapters (e.g., LC, SC, ST, MTP).

With continuing reference to **FIG. 5****,** the DDS controller **124** (via the DMCs **126**) in this embodiment is configured to convert downlink electrical digital signals (or downlink electrical digital data services signals) **128D** over digital line cables **129** from the DDS switch **127** into downlink optical digital signals (or downlink optical digital data services signals) **130D** that can be communicated over downlink optical fiber **135D** to RAUs **14.** The DDS controller **124** (via the DMCs **126**) is also configured to receive uplink optical digital signals **130U** from the RAUs **14** via the uplink optical fiber **135U** and convert the uplink optical digital signals **130U** into uplink electrical digital signals **128U** to be communicated to the DDS switch **127.** In this manner, the digital data services can be provided over optical fiber as part of the optical fiber-based distributed antenna system **120** to provide digital data services in addition to RF communication services. Client devices located at the RAUs **14** can access these digital data services and/or RF communications services depending on their configuration. Exemplary digital data services include Ethernet, WLAN, WiMax, WiFi, Digital Subscriber Line (DSL), and LTE, etc. Ethernet standards could be supported, including but not limited to 100 Megabits per second (Mbs) (i.e., fast Ethernet) or Gigabit (Gb) Ethernet, or ten Gigabit (10G) Ethernet.

With continuing reference to **FIG. 5****,** in this embodiment, downlink and uplink optical fibers **132D, 132U** are provided in a fiber optic cable **134** that is interfaced to the ICU **85.** The ICU **85** provides a common point in which the downlink and uplink optical fibers **132D, 132U** carrying digital optical signals can be bundled with the downlink and uplink optical fibers **16U, 16D** carrying optical RF communications signals. One or more of the fiber optic cables **134,** also referenced herein as array cables **134,** can be provided containing the downlink and uplink optical fibers **135D, 135U** for RF communications services and digital data services to be routed and provided to the RAUs **14.** Any combination of services or types of optical fibers can be provided in the array cable **134.** For example, the array cable **134** may include single mode and/or multi-mode optical fibers for RF communication services and/or digital data services.

Examples of ICUs that may be provided in the optical fiber-based distributed antenna system **120** to distribute both downlink and uplink optical fibers **135D, 135U** for RF communications services and digital data services are described in U.S. Patent Application Serial No. 12/466,514, filed on May 15, 2009, entitled "Power Distribution Devices, Systems, and Methods For Radio-Over-Fiber (RoF) Distributed Communication," and U.S. Provisional Application Serial No. 61/330,385 filed on May 2, 2010, entitled "Power Distribution in Optical Fiber-Based Distributed Communications Systems Providing Digital Data and Radio Frequency (RF) Communications Services, and Related Components and Methods," both of which are incorporated herein by reference in their entireties.

With continuing reference to **FIG. 5****,** some RAUs **14** can be connected to access units (AUs) **138,** which may be access points (APs) or other devices supporting digital data services. AUs **138** can also be connected directly to the HEU **12.** AUs **138** are illustrated, but the AUs **138** could be any other device supporting digital data services. In the example of AUs, the AUs **138** provide access to the digital data services provided by the DDS switch **127.** This is because the downlink and uplink optical fibers **135D, 135U** carrying downlink and uplink optical digital signals **130D, 130U** converted from downlink and uplink electrical digital signals **128D, 128U** from the DDS switch **127** are provided to the AUs **138** via the array cables **134** and RAUs **14.** Digital data client devices can access the AUs **138** to access digital data services provided through the DDS switch **127.** The AUs **138** may also each include an antenna **140** to provide wireless access to digital data services provided through the DDS switch **127.**

As will be described in more detail below, providing RF communications services and digital data services involves providing RF communications modules and DDS modules in the RAUs **14** and/or AUs **138** in the example of **FIG. 5****.** These modules are power-consuming modules that require power to operate. Power distributed to the RAUs can also be used to provide access to power for DDS modules, as opposed to providing separate power sources for DDS modules and RF communications modules. For example, power distributed to the RAUs **14** in **FIG. 5** by or through the ICUs **85** can also be used to provide power to the AUs **138** located at the RAUs **14** in the optical fiber-based distributed antenna system **120.** In this regard, the ICUs **85** may be configured to provide power for both RAUs **14** and the AUs **138** over an electrical power line **142,** as illustrated in **FIG. 5****.** As will also be described in more detail below, the RAUs **14** and/or AUs **138** may also be configured with powered ports to provide power to external client devices connected to the powered ports, such as IEEE 802.3af Power-over-Ethernet (PoE) compatible devices as an example. However, referring to **FIG. 5** as an example, the power made available to the RAUs **14** and AUs **138** may not be sufficient to power all of the modules provided and external devices connected to the RAUs **14** and AUs **138.**

In this regard, embodiments disclosed below include power management for an RAU(s) in a distributed antenna system, and related devices, systems, methods, and computer-readable media. Power can be managed for an RAU configured to power modules and devices that may require more power to operate than power available to the RAU. For example, the RAU may be configured to include power-consuming RAU modules to provide distributed antenna system-related services. As another example, the RAU may be configured to provide power through powered ports in the RAU to external power-consuming devices. Depending on the configuration of the RAU, the power-consuming RAU modules and/or external power-consuming devices may demand more power than is available at the RAU. In this instance, the power available at the RAU can be distributed to the power-consuming modules and devices based on the priority of services desired to be provided by the RAU.

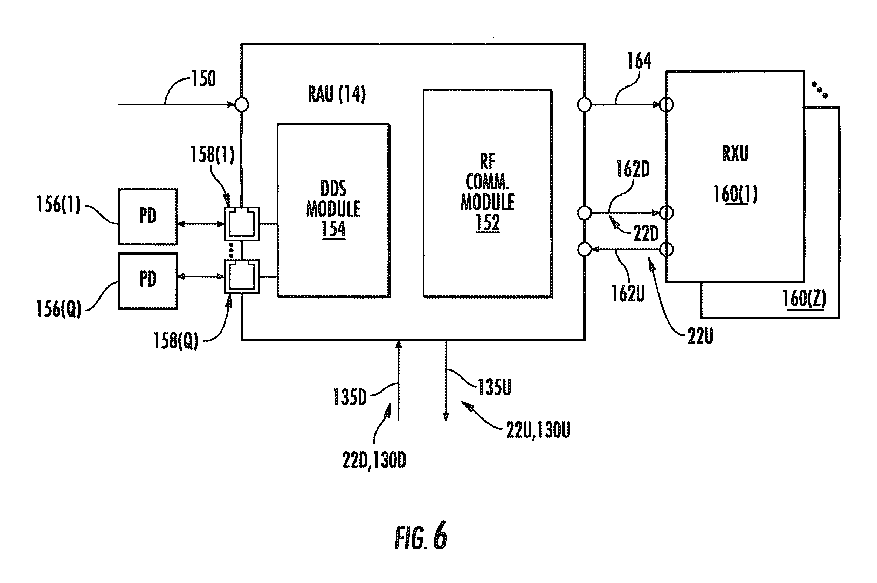

**FIG. 6** is a schematic diagram of an exemplary RAU **14** configured with power-consuming components. The RAU **14** is configured to receive power over a power line **150** routed to the RAU **14** from either a local power source or a remote power source to make power available for power-consuming components associated with the RAU **14.** As a non-limiting example, the power line **150** may provide a voltage of between forty-eight (48) and sixty (60) Volts at a power rating of between eighty (80) to one hundred (100) Watts. In this example, the RAU **14** includes an RF communications module **152** for providing RF communications services. The RF communications module **152** requires power to operate in this embodiment and receives power from the power line **150.** Power from the power line **150** may be routed directly to the RF communications module **152,** or indirectly through another module. The RF communications module **152** may include any of the previously referenced components to provide RF communications services, including O/E and E/O conversion.

With continuing reference to **FIG. 6****,** the RAU **14** may also include a DDS module **154** to provide media conversion (e.g., O/E and E/O conversions) and route digital data services received from the DDS switch **127** in **FIG. 5** to externally connected power-consuming devices (PDs) **156(1)-156(Q)** configured to receive digital data services. Power from the power line **150** may be routed to the RF communications module **152,** and from the RF communications module **152** to the DDS module **154.** With reference to **FIG. 6****,** the digital data services are routed by the DDS module **154** through communications ports **158(1)-158(Q)** provided in the RAU **14.** As a non-limiting example, the communications ports **158(1)-158(Q)** may be RJ-45 connectors. The communications ports **158(1)-158(Q)** may be powered, meaning that a portion of the power from the power line **150** is provided to the powered communications ports **158(1)-158(Q).** In this manner, PDs **156(1)-156(Q)** configured to receive power through a powered communications port **158** can be powered from power provided to the RAU **14** when connected to the powered communications port **158.** In this manner, a separate power source is not required to power the PDs **156(1)-156(Q).** For example, the DDS module **154** may be configured to route power to the powered communications ports **158(1)-158(Q)** as described in the PoE standard.

With continuing reference to **FIG. 6****,** one or more remote expansion units (RXUs) **160(1)-160(Z)** may also be connected to the RAU **14.** The RXUs **160(1)-160(Z)** can be provided to provide additional RF communications services through the RAU 14, but remotely from the RAU **14.** For example, if additional RF communications bands are needed and there are no additional bands available in a distributed antenna system, the RF communications bands of an existing RAU **14** can be expanded without additional communications bands by providing the RXUs **160(1)-160(Z).** The RXUs **160(1)-160(Z)** are connected to the distributed antenna system through the RAU **14.** The RXUs **160(1)-160(Z)** can include the same or similar components provided in the RF communications module **152** to receive downlink RF communications signals **162D** and to provide received uplink RF communications signals **162U** from client devices to the distributed antenna system through the RAU **14.** The RXUs **160(1)-160(Z)** are also power-consuming modules, and thus in this embodiment, power from the power line **150** is routed by the RAU **14** to the RXUs **160(1)-160(Z)** over a power line **164.**

The power provided on the power line **150** in **FIG. 6** may not be sufficient to provide power for the modules **152, 154, 160(1)-160(Z)** and external PDs **156(1)-156(Q)** provided in the RAU **14.** For example, eighty (80) Watts of power may be provided on the power line **150** in **FIG. 6****.** However, the RF communications module **152** may consume thirty (30) Watts of power, the RXUs **160(1)-160(Z)** may consume twenty (20) Watts of power, and the DDS module **154** may consume five (5) Watts of power. This is a total of fifty-five (55) Watts. In this example, twenty-five (25) Watts are available to be shared among the powered communications ports **158(1)-158(Q).** However, the PDs **156(1)-156(Q)** may be configured to require more power than twenty-five (25) Watts. For example, if the PDs **156(1)-156(Q)** are configured according to the PoE standard, power source equipment (PSE) provided in the RAU **14** to provide power to the powered communications ports **158(1)-158(Q)** may be required to provide up to 15.4 Watts of power to each powered communications port **158(1)-158(Q).** In this example, if more than one powered communications port **158(1)-158(Q)** is provided, there will not be sufficient power to power each of the powered communications port **158(1)-158(Q)** at 30 Watts (i.e., a PoE Class 4 device).

Thus, to ensure proper operation of the maximum power consuming modules **152, 154, 160(1)-160(Z)** possible in an RAU **14,** less power could be provided to the powered communications ports **158(1)-158(Q)** or only one powered communications port **158(1)-158(Q)** could be enabled with power. However, if one of the other modules **152, 154, 160(1)-160(Z)** was not present, sufficient power may be available to be provided to each of the powered communications ports **158(1)-158(Q)** provided. Further, if a PD **156** connected to a powered communication port **158** is a lower class device that does not require 30 Watts of power, there may be sufficient power available to power the PDs **156(1)-156(Q)** connected to each of the powered communications ports **158(1)-158(Q).**

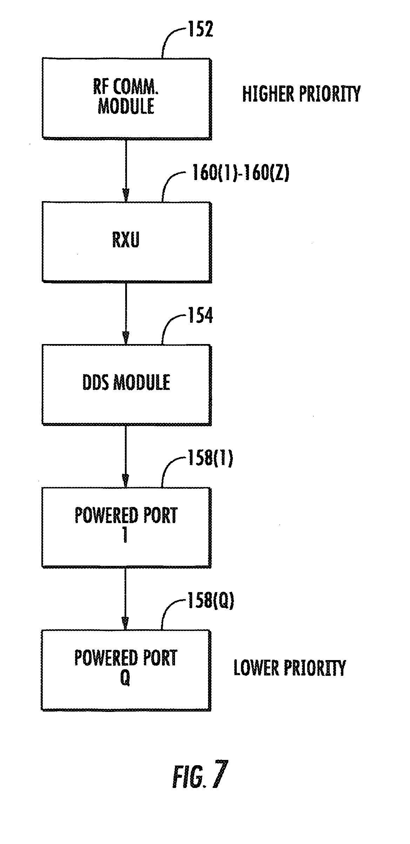

In this regard, **FIG. 7** is an exemplary priority scheme for a power management scheme to provide sufficient power to power-consuming modules and PDs that may be powered by an RAU **14.** In this example, RF communications services have been assigned higher priority than digital data services and powered ports. Thus, in this example, the available power on the power line **150** will be made available to the RF communications module **152.** If more power is available from the power line **150** after power has been budgeted for the RF communications module **152,** the remaining power is made available to the RXUs **160(1)-160(Z)** to provide expansion RF communications services. If more power is available from the power line **150** after power has been budgeted for the RF communications module **152** and the RXUs **160(1)-160(Z),** the remaining power is made available to the DDS module **154** to provide digital data services. If more power is available from the power line **150** after power has been budgeted for the RF communications module **152,** the RXUs **160(1)-160(Z),** and the DDS module **154,** the remaining power is made available to the powered communications ports **158(1)-158(Q)** to provide power to the PDs **156(1)-156(Q).** Note that the priority schemed in **FIG. 7** is exemplary and any other priority scheme desired could be implemented in a power management scheme.

With continuing reference to **FIG. 7****,** power is budgeted such that power is made available sufficient to power the PD **158(1)** connected to the first powered communications port **158(1).** If more power is available from the power line **150** after power has been budgeted for the RF communications module **152,** the RXUs **160(1)-160(Z),** the DDS module **154,** and the PD **158(1)** connected to the first powered communications port **158(1),** power is made available to the other powered communications ports **158(2)-158(Q)** until sufficient power is not available to power the PDs **156(2)-156(Q)** connected to the additional powered communications ports **158(2)-158(Q).** If the remaining power budget is not sufficient to power the PDs **156** connected to any powered communications ports **158,** these powered communications ports **158** can be disabled. Further, if any of the modules **152, 154, 160(1)-160(Z)** are not present or are removed for a particular RAU **14,** the available power budget for the powered communications ports **158(1)-158(Q)** may increase thereby allowing previously disabled powered communications ports **158(1)-158(Q)** to be enabled.

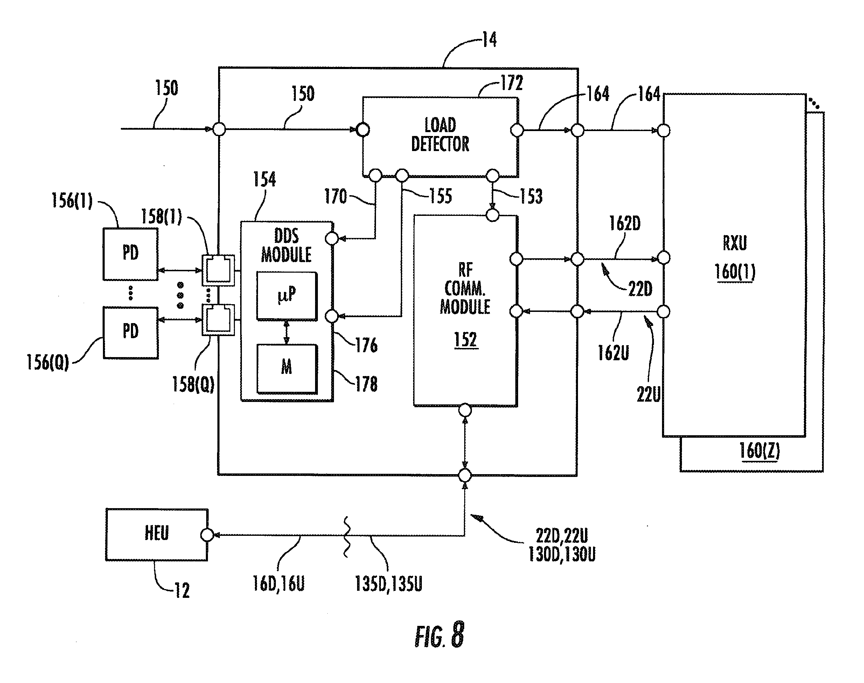

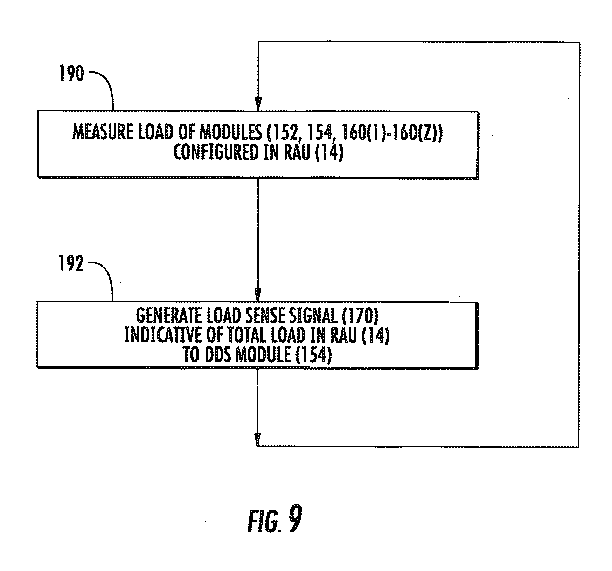

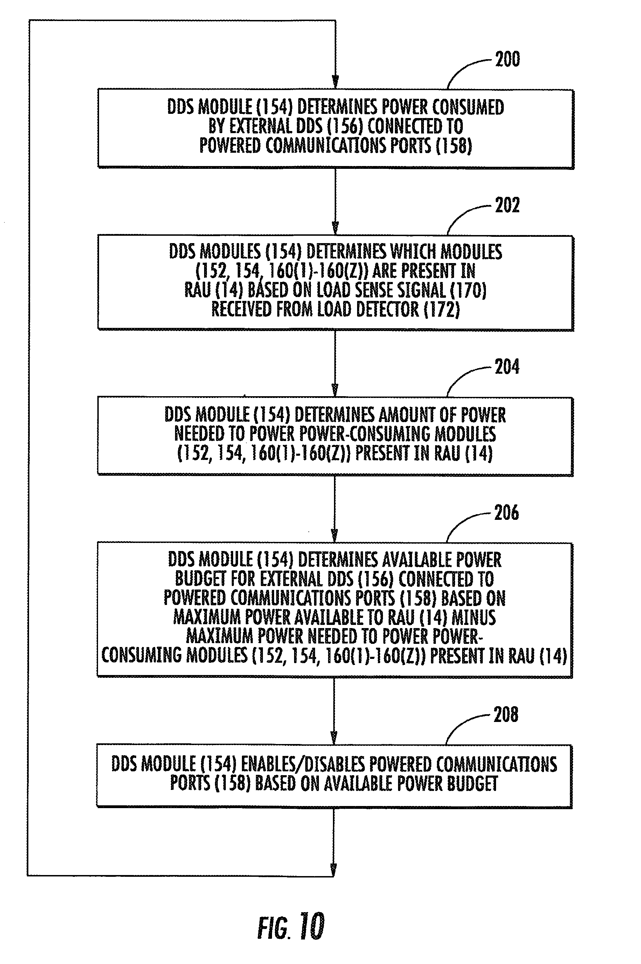

**FIG. 8** is a schematic diagram of an exemplary embodiment of components that can be provided in the RAU **14** of **FIG. 6** to provide for local power management of power provided to the power-consuming modules **152, 154, 160(1)-160(Z) and** the externally connected PDs **156(1)-156(Q).** The discussion of local power management of the RAU **14** in **FIG. 8** will be described in conjunction with the flowcharts in **FIGS. 9** and **10****.** **FIG. 9** is a flowchart illustrating an exemplary process for measuring power consumed by the RAU **14** and generating a load sense signal **170** in **FIG. 8** indicative of the power consumed by the RAU **14** for providing local power management. **FIG. 10** is a flowchart illustrating an exemplary process for providing local power management of power provided to external PDs **156(1)-156(Q)** connected to the RAU **14.**

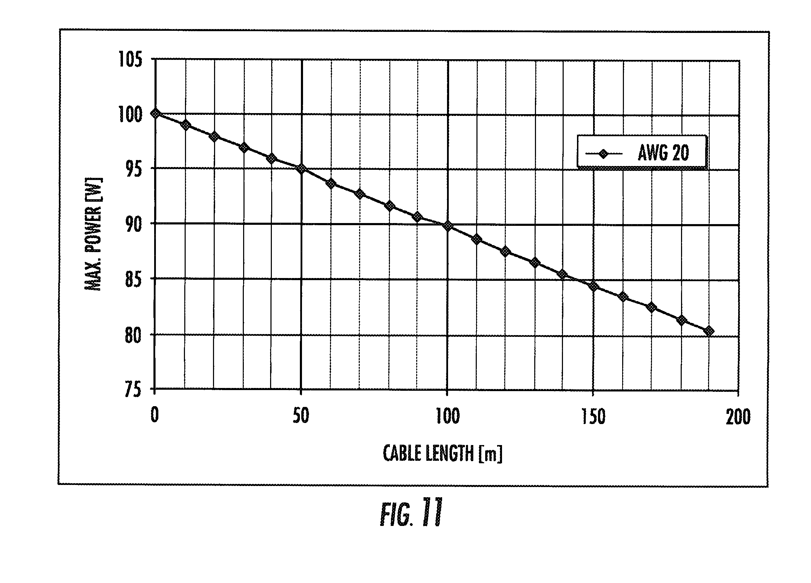

With reference to **FIGS. 8-10****,** the RAU **14** includes a power or load detector **172.** The load detector **172** can be comprised of load detection circuitry or any other type of detector configured to detect the load of the modules **152, 154, 160(1)-160(Z)** configured in the RAU **14** (block **190** in **FIG. 9**). The load sense signal **170** indicative of the load of the modules **152, 154, 160(1)-160(Z)** present in the RAU **14** is communicated to the DDS module **154** (block **192** in **FIG. 9**)**.** Because the loads of the various combinations and configurations of the modules **152, 154, 160(1)-160(Z)** that can be provided in the RAU **14** are unique, it can be determined from the load sense signal **170** which of the modules **152, 154, 160(1)-160(Z)** are actually present in an RAU **14,** and thus the amount of power needed to sufficiently power the modules **152, 154, 160(1)-160(Z)** present in the RAU **14.** By knowing the maximum power available to the RAU **14** and the power needed to sufficiently power the modules **152, 154, 160(1)-160(Z)** present in the RAU **14,** the amount of remaining available power that can be provided to the PDs **156(1)-156(Q)** connected to the powered communications ports **158(1)-158(Q)** can be determined, as discussed, by example, in **FIGS. 10** and **11** below.

The DDS module **154** determines the power consumed by the external PDs **156(1)-156(Q)** connected to the powered communications ports **158(1)-158(Q)** (block **200** in **FIG. 10**). For example, the DDS module **154** in this embodiment in **FIG. 8** includes a controller **176** that is coupled to memory **178** for executing instructions to perform operations described herein to determine the available power budget available for the PDs **156(1)-156(Q)** and to enable the appropriate powered communications ports **158(1)-158(N).** The DDS module **154** then determines which modules **152, 154, 160(1)-160(Z)** are present in the RAU **14** based on the load sense signal **170** received from the load detector **172** (block **202** in **FIG. 10**). For example, the controller **176** in the DDS module **154** could perform a look up in memory **178** that contains the loads for the combinations of the modules **152, 154, 156** present in the RAU **14.** The DDS module **154** then determines the amount of power needed to power the modules **152, 154, 160(1)-160(Z)** present in the RAU **14** by performing another look up in memory **178** that contains the maximum power required to power the modules **152, 154, 160(1)-160(Z)** (block **204** in **FIG. 10**).

With reference to **FIG. 10****,** the DDS module **154** determines the available power budget for providing power to the external PDs **156(1)-156(Q)** connected to the powered communications ports **158(1)-158(Q)** based on the maximum power available to the RAU **14** from the power line **150** minus the maximum power needed to provide power to the modules **152, 154, 160(1)-160(Z)** present in the RAU **14** (block **206).** The DDS module **154** then enables or disables the powered communications ports **158(1)-158(Q)** based on the available power budget (block **208**). The powered communications ports **158(1)-158(Q)** are enabled or disabled depending on the class of the external PDs **156(1)-156(Q)** connected to the powered communications ports **158(1)-158(Q).** For example, if the available power budget is 14 Watts, a PoE Class 3 PD **156** requiring 15.4 Watts connected to a powered communications port **158** cannot be powered, and thus the powered communications port **158** is disabled. However, if a PoE Class 2 or lower PD **156** requiring 7 Watts or less is connected to a powered communications port **158,** the powered communications port **158** can be enabled since the available power budget is greater than 7 Watts. The DDS module **154** enables each powered communications port **158(1)-158(Q)** having a connected PD **156(1)-156(Q)** until the available remaining power budget is no longer sufficient to enable any further powered communications ports **158(1)-158(Q).**

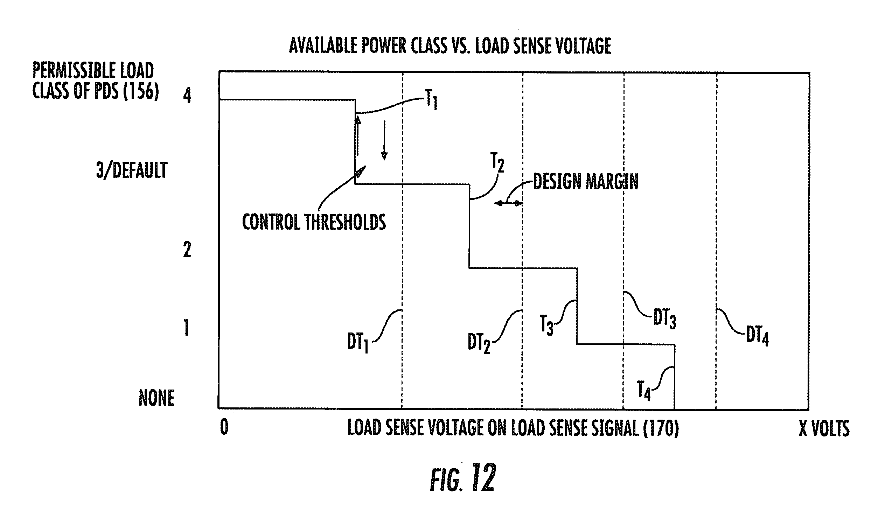

If the available power at an RAU **14** is known, the load sense signal **170** can be used directly to determine which load classes of PDs **156** are available to be powered by the RAU **14** through the powered communications port **158.** For example, as illustrated in the example of **FIG. 11****,** the length of the cable provided between the power source for the RAU **14** and the RAU **14** provides a predictable power degradation. This predictable power degradation can be provided in memory **178** in the DDS module **154** in **FIG. 8** so that the DDS module **154** can determine the maximum power available to the RAU **14** inferentially if the maximum power provided by the power source is known and stable and also programmed into the memory **178** or otherwise made available. In this regard, **FIG. 12** is a schematic diagram illustrating an exemplary relation between load voltage and available classes for external PDs **156** connected to an RAU **14.** As illustrated therein, as the load sense voltage present on the load sense signal **170** increases, the available power budget decreases. Thus, the lower the class of PD **156** can be powered. Thresholds **T₁-T₄** in the load sense voltage show boundaries where the load sense voltage of the load sense signal **170** significantly increases in stair-step fashion illustrating an additional module **152, 154, 160(1)-160(Z)** present in the RAU **14.** To take into account design margins, thresholds or boundaries **DT₁-DT₄** are provided. If the load sense voltage of the load sense signal **170** moves beyond a threshold **DT₁-DT₄,** the highest class of PD **156** that can be powered is lowered to the next lowest class.

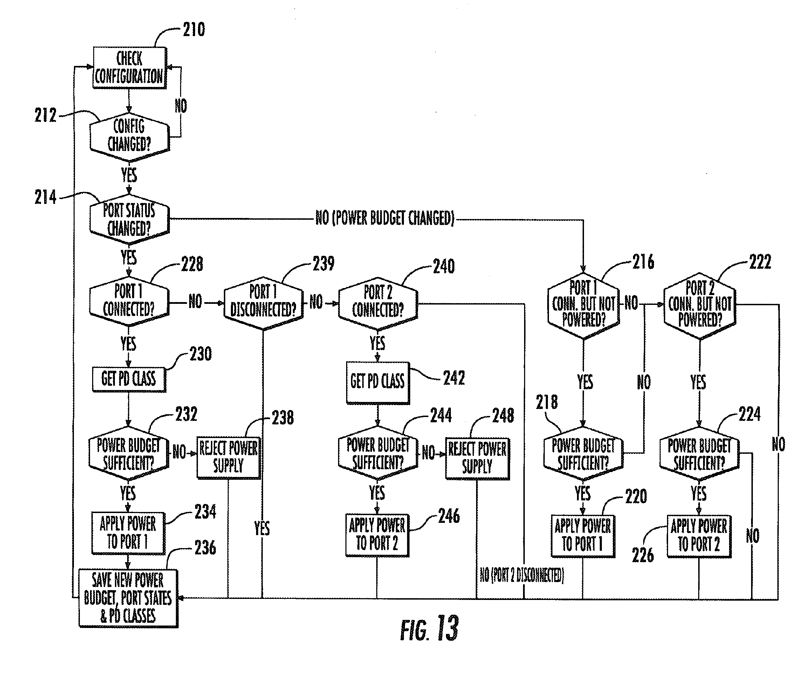

**FIG. 13** **is** a flowchart illustrating another exemplary power management process that can be provided by the RAU **14** to manage power provided to PDs **156(1)-156(Q)** when the status of the powered communications ports **158(1)-158(Q)** provided in an RAU **14** changed (i.e., connected or disconnected). If the status of any powered communications port **158(1)-158(Q)** has increased power requirements, such as by a new connection or a connection with a PD **156** requiring more power, other powered communications ports **158(1)-158(Q)** may be required to be disabled to remain within the available power budget. If the status of any powered communications ports **158(1)-158(Q)** has decreased power requirements, other powered communications ports **158(1)-158(Q)** may be able to be enabled and still remain within the available power budget.

With reference to **FIG. 13****,** the controller **176** determines if the configuration of the RAU **14** has changed (block **210**). If changed (block **212**), the controller **176** determines if the change is due to a change in status of a powered communications port **158(1)-158(Q)** in the RAU **14** (block **214**). In this example, power is managed for two (2) powered communications ports **158(1), 158(2),** but any number could be managed. If a powered communications port **158(1)-158(Q)** has not changed, this means that the available power budget to provide power to the PDs **156(1)-156(Q)** has changed since at least one module **152, 154, 160(1)-160(Z)** has either been removed or added to the RAU **14.** In this instance, the controller **176** determines if a PD **156(1)** is connected to the first powered communications port **158(1)** that is unpowered (block **216**). If so, the controller **176** determines if the available power budget is sufficient to provide power to the PD **156(1)** connected to the first powered communications port **158(1)** (block **218).** If so, the controller **176** directs the PSE **170** to provide power to the first powered communications port **158(1)** (block **220).** If not, the controller **176** checks the status of the second powered communications port **158(2)** (block **222**)**.**

If the controller **176** determines that the first powered communications port 158(1) is not powered (block **216**), the controller **176** determines if a PD **156(2)** is connected to a second powered communications port **158(2)** that is unpowered (block **222**). If so, the controller **176** determines if the available power budget is sufficient to provide power to the PD **156(2)** connected to the second powered communications port **158(2)** (block **224**)**.** If so, the controller **176** directs the PSE **170** to provide power to the second powered communications port **158(2)** (block **226**). If not, the controller **176** does not change the power configuration of the second powered communications port **158(2).** Thus, the controller **176** manages power to by enabling a first powered communications port **158(1)** if available power budget is present, and then enabling a second powered communications port **158(2)** if available power budget is available after providing power to the first powered communications port **158(1).** When the available power budget changes for the RAU **14,** the enabling or disabling of the powered communications ports **158(1),** 158(2) is re-evaluated based on the available power budget.

If the status of the powered communications ports **158(1), 158(2)** has changed (block **214**), the current power settings of the powered communications ports **158(1), 158(2)** is also re-evaluated. In this regard, if the first powered communications port **158(1)** is connected (block **228),** the controller **176** obtains the class of the PD **156(1)** connected to the powered communications port **158(1)** from the PSE **170** (block **230).** The controller **176** determines if the available power budget is sufficient to power the PD **156(1)** at its class rating (block **232**). If so, the controller **176** directs the PSE **170** to enable the powered communications port **158(1)** to provide power to the PD **156(1)** connected to the powered communications port **158(1)** (block **234).** For example, if the available power budget is 16 Watts, a PoE Class 3 PD **156(1)** rated at 15.4 Watts connected to a powered communications port **158(1)** can be powered, and thus the powered communications port **158(1)** is enabled. However, if a PoE Class 4 PD **156(1)** rated at 30 Watts or less is connected to a powered communications port **158(1),** the powered communications port **158(1)** is disabled since the available power budget is less than 30 Watts.

The available power budget for the RAU **14** is updated by the controller **176** in memory **178** based on the class of the PD **156(1)** connected to the powered communications port **158(1)** (block **236**) so that power is not directed to the second powered communications port **158(2)** if there is not sufficient power budget remaining. If the available power budget is not sufficient to power the PD **156(1)** connected to the powered communications port **158(1)** (block **232),** the controller **176** disables the powered communications port **158(1)** so that power is not made available by the PSE **170** to the powered communications port **158(1)** (block **238).**

If a PD **156(1)** is not connected to the first powered communications port **158(1)** (block **228**), the controller **176** determines if the first powered communications port **158(1)** is disconnected (block **239**). If not, the controller **176** determines if a PD **156(2)** is connected to the second powered communications port **158(2)** (block **240).** If so, the controller **176** obtains the class of the PD **156(2)** connected to the powered communications port **158(2)** from the PSE **170** (block **242**). The controller **176** determines if the available power budget is sufficient to power the PD **156(2)** at its class rating (block **244**). If so, the controller **176** directs the PSE **170** to enable the powered communications port **158(2)** to provide power to the PD **156(2)** connected to the powered communications port **158(2)** (block **246**). The available power budget for the RAU **14** is updated by the controller **176** in memory **178** based on the class of the PD **156(2)** connected to the powered communications port **158(2)** (block **236)** to so that power is not directed to the other powered communications port **158(1)** if there is not sufficient power budget remaining. If the available power budget is not sufficient to power the PD **156(2)** connected to the powered communications port **158(2)** (block **244),** the controller **176** disables the powered communications port **158(2)** so that power is not made available by the PSE **170** to the powered communications port **158(2)** (block **248).**

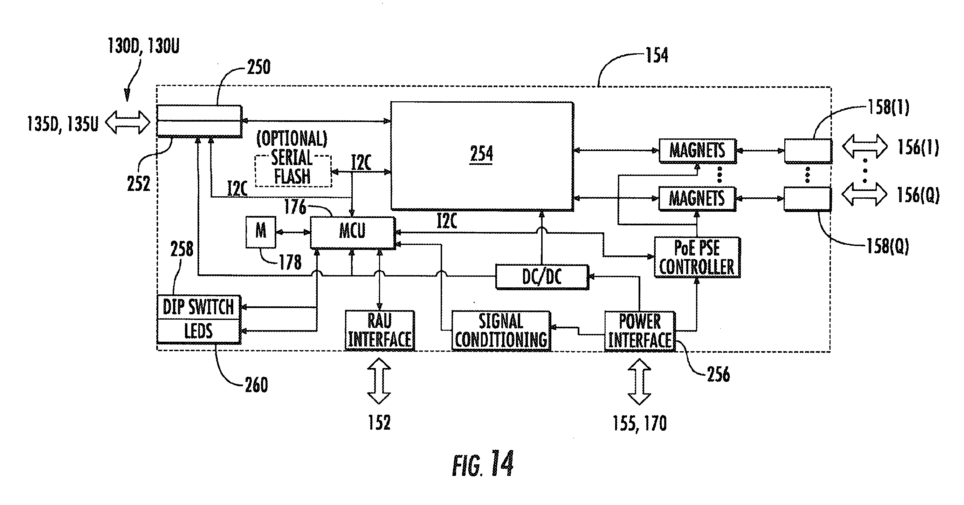

**FIG. 14** is a more detailed diagram of one embodiment of the DDS module **154** in **FIG. 8** **that** can be provided in an RAU **14** to provide digital data services to the PDs **156(1)-156(Q)** connected to the powered communications ports **158(1)-158(Q)** and to provide power management for the powered communications ports **158(1)-158(Q),** as described above. As illustrated in **FIG. 14****,** the DDS module **154** includes a transmit optical sub-assembly (TOSA) **250** and a receive optical sub-assembly (ROSA) **252** to convert downlink optical digital signals **130D** from the downlink optical fiber **135D** to downlink electrical digital signals and convert uplink electrical digital signals to uplink optical digital signals **130U.** A DDS switch **254** is provided to switch digital data services to the powered communications ports **158(1)-158(Q).** The controller **176** is provided as a PoE PSE controller to manage power provided to the powered communications ports **158(1)-158(Q).** A power interface **256** is provided to receive power from a power line **155** and the load sense signal **170** from the load detector **172.** Switches **258** and light emitting diodes (LEDs) **260** are provided to allow configuration settings and to provide a status of the DDS module **174,** respectively.

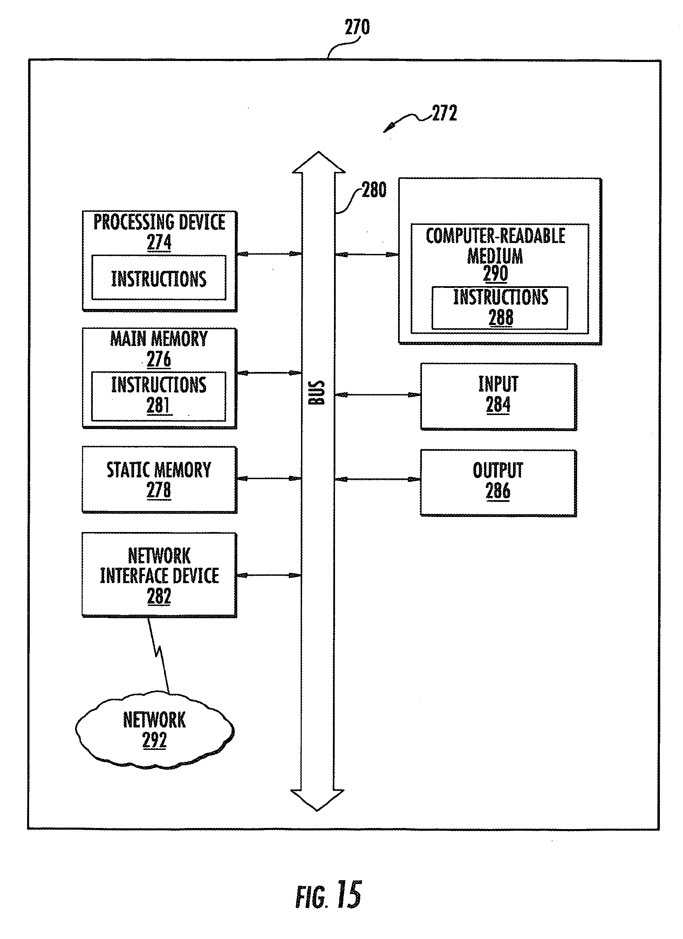

**FIG. 15** **is** a schematic diagram representation of an exemplary electronic device 270 in the exemplary form of an exemplary computer system **272** adapted to execute instructions from an exemplary computer-readable medium to perform power management functions. The electronic device **270** may be the DDS module **154,** but could be any other module or device provided in the RAU **14.** The electronic device **270** could be provided separately from the other modules **152, 154, 160(1)-160(Z)** that can be configured for the RAU **14.** In this regard, the electronic device **270** may comprise a computer system **272** within which a set of instructions for causing the electronic device **270** to perform any one or more of the methodologies discussed herein may be executed. The electronic device **270** may be connected (e.g., networked) to other machines in a LAN, an intranet, an extranet, or the Internet. The electronic device **270** may operate in a client-server network environment, or as a peer machine in a peer-to-peer (or distributed) network environment. While only a single device is illustrated, the term "device" shall also be taken to include any collection of devices that individually or jointly execute a set (or multiple sets) of instructions to perform any one or more of the methodologies discussed herein. The electronic device **270** may be a circuit or circuits included in an electronic board card, such as a printed circuit board (PCB) as an example, server, a personal computer, a desktop computer, a laptop computer, a personal digital assistant (PDA), a computing pad, a mobile device, or any other device, and may represent, for example, a server or a user's computer.

The exemplary computer system **272** includes a processing device or processor **274,** a main memory **276** (e.g., read-only memory (ROM), flash memory, dynamic random access memory (DRAM) such as synchronous DRAM (SDRAM), etc.), and a static memory **278** (e.g., flash memory, static random access memory (SRAM), etc.), which may communicate with each other via a bus **280.** Alternatively, the processing device **274** may be connected to the main memory **276** and/or static memory **278** directly or via some other connectivity means. The processing device **274** may be the controller **176,** and the main memory **276** or static memory **278** may be the memory **178.**

The processing device **274** represents one or more general-purpose processing devices such as a microprocessor, central processing unit, or the like. More particularly, the processing device **274** may be a complex instruction set computing (CISC) microprocessor, a reduced instruction set computing (RISC) microprocessor, a very long instruction word (VLIW) microprocessor, a processor implementing other instruction sets, or processors implementing a combination of instruction sets. The processing device **274** is configured to execute processing logic in instructions **281** for performing the operations and steps discussed herein.

The computer system **272** may further include a network interface device **282.** The computer system **272** also may or may not include an input **284** to receive input and selections to be communicated to the computer system **272** when executing instructions. The computer system **272** also may or may not include an output **286,** including but not limited to a display, a video display unit (e.g., a liquid crystal display (LCD) or a cathode ray tube (CRT)), an alphanumeric input device (e.g., a keyboard), and/or a cursor control device (e.g., a mouse).

The computer system **272** may or may not include a data storage device that includes instructions **288** stored in a computer-readable medium **290** embodying any one or more of the RAU power management methodologies or functions described herein. The instructions **288** may also reside, completely or at least partially, within the main memory **276** and/or within the processing device **274** during execution thereof by the computer system **272,** the main memory **276** and the processing device **274** also constituting computer-readable media. The instructions **288** may further be transmitted or received over a network **292** via the network interface device **282.**

While the computer-readable medium **290** is shown in an exemplary embodiment to be a single medium, the term "computer-readable medium" should be taken to include a single medium or multiple media (e.g., a centralized or distributed database, and/or associated caches and servers) that store the one or more sets of instructions. The term "computer-readable medium" shall also be taken to include any medium that is capable of storing, encoding or carrying a set of instructions for execution by the processing device and that cause the processing device to perform any one or more of the methodologies of the embodiments disclosed herein. The term "computer-readable medium" shall accordingly be taken to include, but not be limited to, solid-state memories, optical and magnetic media, and carrier wave signals.

The DDS modules disclosed herein may be provided any type of digital data services. The powered communications ports provided in the RAU may be provided to meet any power standard. In the example of PoE, IEEE 802.3at specifies that link layer discovery protocol (LLDP) may be used and supported by the components described herein, including the controllers and power management components in the RAUs. LLDP allows exchange of data with PDs to determine the power rating of the PD. Also, more precise information regarding power requirements can only be exchanged using LLDP for media endpoint devices, such as LLDP-MED, according to TIA-1057). LLDP-MED allows requesting of power by PDs between 0 and 102.3 Watts in 0.1 Watt steps. LLDP and LLDP-MED are layer 2 protocols, which require a means to receive and transmit those Ethernet packets from and to PDs. This can be performed by the controllers disclosed herein and provided in the RAUs having an Ethernet media access controller connected to an Ethernet switch inside the media converter. Alternatively, power ratings for a PD could be provided manually or programmed into the RAUs by an operator accessing the RAUs in the distributed antenna system.

The embodiments disclosed herein include various steps. The steps of the embodiments disclosed herein may be performed by hardware components or may be embodied in machine-executable instructions, which may be used to cause a general-purpose or special-purpose processor programmed with the instructions to perform the steps. Alternatively, the steps may be performed by a combination of hardware and software.

The embodiments disclosed herein may be provided as a computer program product, or software, that may include a machine-readable medium (or computer-readable medium) having stored thereon instructions, which may be used to program a computer system (or other electronic devices) to perform a process according to the embodiments disclosed herein. A machine-readable medium includes any mechanism for storing or transmitting information in a form readable by a machine (e.g., a computer). For example, a machine-readable medium includes a machine-readable storage medium (e.g., read only memory ("ROM"), random access memory ("RAM"), magnetic disk storage media, optical storage media, flash memory devices, etc.), a machine-readable transmission medium (electrical, optical, acoustical or other form of propagated signals (e.g., carrier waves, infrared signals, digital signals, etc.), etc.

Unless specifically stated otherwise as apparent from the previous discussion, it is appreciated that throughout the description, discussions utilizing terms such as "processing," "computing," "determining," "displaying," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description above. In addition, the embodiments described herein are not described with reference to any particular programming language. It will be appreciated that a variety of programming languages may be used to implement the teachings of the embodiments as described herein.

Those of skill in the art would further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The components of the distributed antenna systems described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A controller may be a processor. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. It is to be understood that the operational steps illustrated in the flow chart diagrams may be subject to numerous different modifications as will be readily apparent to one of skill in the art. Those of skill in the art would also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, as used herein, it is intended that the terms "fiber optic cables" and/or "optical fibers" include all types of single mode and multi-mode light waveguides, including one or more optical fibers that may be upcoated, colored, buffered, ribbonized and/or have other organizing or protective structures in a cable such as one or more tubes, strength members, jackets or the like. The optical fibers disclosed herein can be single mode or multi-mode optical fibers. Likewise, other types of suitable optical fibers include bend-insensitive optical fibers, or any other expedient of a medium for transmitting light signals. An example of a bend-insensitive, or bend resistant, optical fiber is ClearCurve^{®} Multimode fiber commercially available from Corning Incorporated. Suitable fibers of this type are disclosed, for example, in U.S. Patent Application Publication Nos. 2008/0166094 and 2009/0169163.

Many modifications and other embodiments of the embodiments set forth herein will come to mind to one skilled in the art to which the embodiments pertain having the benefit of the teachings presented in the foregoing descriptions and the associated drawings.

## Claims

1. A remote antenna unit for a distributed antenna system, comprising:
at least one power-consuming remote antenna unit module (14);
comprised of at least one of a radio frequency communications module configured to provide radio frequency communications services and a digital data services module configured to provide digital data services;
at least one powered port configured to provide power to at least one external power-consuming device (156(1) - 156(Q)) connected to the at least one powered port (158(1) - 158(Q)); and **characterized by** further comprising
a controller configured to:
determine an available power budget for the at least one powered port; and
enable power for the at least one powered port if the available power budget is sufficient to power the at least one external power-consuming device connected to the at least one powered port.

2. The remote antenna unit of claim 1, wherein the controller is the digital data services module.

3. The remote antenna unit according to any of the preceding claims, wherein the at least one powered port is configured to receive power configured to be provided to the at least one external power-consuming device.

4. The remote antenna unit according to any of the preceding claims, wherein the at least one power-consuming remote antenna unit module is comprised of at least one optical-to-electrical converter (30) configured to convert a downlink optical radio frequency communications signal to a downlink electrical radio frequency communications signal, and wherein the at least one power-consuming remote antenna unit module is comprised of at least one electrical-to-optical converter (34) configured to convert an uplink electrical radio frequency communications signal to an uplink optical radio frequency communications signal.

5. The remote antenna unit according to claim 4, wherein the at least one power-consuming remote antenna unit module further comprises at least one remote expansion unit module (160(1) - 160(X)) configured to provide radio frequency communications services, wherein the at least one remote expansion unit module is configured to receive downlink radio frequency communications signals, and wherein the at least one remote expansion unit module is configured to receive uplink radio frequency communications signals.

6. The remote antenna unit according to claim 4, further comprising a load detector (172) configured to provide a load sense signal to the controller indicative of a total power consumed by the at least one power-consuming remote antenna unit module and the at least one external power-consuming device.

7. The remote antenna unit according to claim 4, where the controller is configured to determine the available power budget based on the power required by the at least one power-consuming remote antenna unit module, and wherein the controller is configured to determine the power required for the at least one power-consuming remote antenna unit module by determining which of the at least one power-consuming remote antenna unit modules are present.

8. The remote antenna unit of claim 7, wherein the controller is configured to determine which of the at least one power-consuming remote antenna unit modules are present by:
subtracting power consumed by the at least one external power-consuming device connected to the at least one powered port from a total power available to provide a power consumed by the at least one power-consuming remote antenna unit module; and
correlating the power consumed by the at least one power-consuming remote antenna unit module to those of the at least one power-consuming remote antenna unit modules that are present.

9. The remote antenna unit according to any of the preceding claims, wherein the at least one powered port is comprised of a plurality of powered ports, and
wherein the controller is further configured to disable at least one first port among the plurality of powered ports if the available power budget is only sufficient to power the at least one external power-consuming device connected to at least one second port among the plurality of powered ports.

10. A method of managing power consumed at a remote antenna unit in a distributed antenna system, **characterized by** the method steps of:
determining an available power budget for at least one powered port configured to provide power to at least one external power-consuming device (156(1) - 156(Q)) connected to the at least one powered port(158(1) - 158(Q)) based on power required by at least one power-consuming remote antenna unit module (14); and
enabling power for the at least one powered port if the available power budget is sufficient to power the at least one external power-consuming device connected to the at least one powered port,
wherein the at least one power-consuming remote antenna unit module is comprised of at least one of a radio frequency communications module configured to provide radio frequency communications services and a digital data services module (154) configured to provide digital data services.

11. The method according to claim 10, comprising the at least one powered port receiving power configured to be provided to the at least one external power-consuming device.

12. The method according to any of the preceding method claims, further comprising converting a downlink optical radio frequency communications signal to a downlink electrical radio frequency communications signal in at least one optical-to-electrical converter (30), and converting an uplink electrical radio frequency communications signal to an uplink optical radio frequency communications signal in at least one electrical-to-optical converter (34).

13. The method according to claim 12, further comprising:
the at least one power-consuming remote antenna unit module providing radio frequency communications services to at least one remote expansion unit module,
receiving downlink radio frequency communications signals in the at least one remote expansion unit module, and
receiving uplink radio frequency communications signals in the at least one remote expansion unit module.

14. The method according to claim 12 or 13, further comprising providing a load sense signal from a load detector indicative of a total power consumed by the at least one power-consuming remote antenna unit module and the at least one external power-consuming device.

15. The method according to claim 12, comprising determining the power required for the at least one power-consuming remote antenna unit module by determining which of the at least one power-consuming remote antenna unit modules are present.

## Patentansprüche

1. Abgesetzte Antenneneinheit für ein verteiltes Antennensystem, umfassend:
mindestens ein energieverbrauchendes abgesetztes Antenneneinheitsmodul (14), das ein Funkfrequenzkommunikationsmodul, das zum Bereitstellen von Funkfrequenzkommunikationsdienste ausgelegt ist, und/oder ein Digitaldatendienstmodul umfasst, das zum Bereitstellen von Digitaldatendiensten ausgelegt ist;
mindestens einen energiegespeisten Anschluss, der dazu ausgelegt ist, mindestens einer an den mindestens einen energiegespeisten Anschluss (158(1) - 158 (Q) ) angeschlossenen externen, energieverbrauchenden Vorrichtung (156(1) - 156(Q)) Energie bereitzustellen; und **dadurch gekennzeichnet, dass** sie darüber hinaus umfasst:
eine Steuereinheit, die dazu ausgelegt ist:
ein verfügbares Energiebudget für den mindestens einen energiegespeisten Anschluss zu bestimmen; und
Energie für den mindestens einen energiegespeisten Anschluss freizugeben, wenn das verfügbare Energiebudget zur Energiebereitstellung an die mindestens eine an den mindestens einen energiegespeisten Anschluss angeschlossene externe, energieverbrauchende Vorrichtung ausreicht.

2. Abgesetzte Antenneneinheit nach Anspruch 1, wobei es sich bei der Steuereinheit um das Digitaldatendienstmodul handelt.

3. Abgesetzte Antenneneinheit nach einem der vorhergehenden Ansprüche, wobei der mindestens eine energiegespeiste Anschluss dazu ausgelegt ist, Energie zu empfangen, die dazu ausgelegt ist, der mindestens einen externen, energieverbrauchenden Vorrichtung bereitgestellt zu werden.

4. Abgesetzte Antenneneinheit nach einem der vorhergehenden Ansprüche, wobei das mindestens eine energieverbrauchende abgesetzte Antenneneinheitsmodul mindestens einen optisch-elektrischen Umsetzer (30) umfasst, der dazu ausgelegt ist, ein optisches Downlink-Funkfrequenzkommunikationssignal in ein elektrisches Downlink-Funkfrequenzkommunikationssignal umzusetzen, und wobei das mindestens eine energieverbrauchende abgesetzte Antenneneinheitsmodul mindestens einen elektrisch-optischen Umsetzer (34) umfasst, der dazu ausgelegt ist, ein elektrisches Uplink-Funkfrequenzkommunikationssignal in ein optisches Uplink-Funkfrequenzkommunikationssignal umzusetzen.

5. Abgesetzte Antenneneinheit nach Anspruch 4, wobei das mindestens eine energieverbrauchende abgesetzte Antenneneinheitsmodul darüber hinaus mindestens ein abgesetztes Erweiterungseinheitsmodul (160(1) - 160(X)) umfasst, das dazu ausgelegt ist, Funkfrequenzkommunikationsdienste bereitzustellen, wobei das mindestens eine abgesetzte Erweiterungseinheitsmodul dazu ausgelegt ist, Downlink-Funkfrequenzkommunikationssignale zu empfangen, und wobei das mindestens eine abgesetzte Erweiterungseinheitsmodul dazu ausgelegt ist, Uplink-Funkfrequenzkommunikationssignale zu empfangen.

6. Abgesetzte Antenneneinheit nach Anspruch 4, darüber hinaus einen Lastdetektor (172) umfassend, der dazu ausgelegt ist, der Steuereinheit ein Lastabfühlsignal bereitzustellen, das eine Gesamtenergie angibt, die durch das mindestens eine energieverbrauchende abgesetzte Antenneneinheitsmodul und die mindestens eine externe, energieverbrauchende Vorrichtung verbraucht wird.

7. Abgesetzte Antenneneinheit nach Anspruch 4, wobei die Steuereinheit dazu ausgelegt ist, das verfügbare Energiebudget auf Grundlage der durch das mindestens eine energieverbrauchende abgesetzte Antenneneinheitsmodul benötigten Energie zu bestimmen, und wobei die Steuereinheit dazu ausgelegt ist, die für das mindestens eine energieverbrauchende abgesetzte Antenneneinheitsmodul erforderliche Energie dadurch zu bestimmen, dass bestimmt wird, welche der mindestens einen vorliegenden energieverbrauchenden abgesetzten Antenneneinheitsmodule vorhanden sind.

8. Abgesetzte Antenneneinheit nach Anspruch 7, wobei die Steuereinheit dazu ausgelegt ist, zu bestimmen, welche der mindestens in Einzahl vorliegenden energieverbrauchenden abgesetzten Antenneneinheitsmodule vorhanden sind, durch:
Subtrahieren von Energie, die durch die mindestens eine an den mindestens einen energiegespeisten Anschluss angeschlossene, externe, energieverbrauchende Vorrichtung verbraucht wird, von einer verfügbaren Gesamtenergie, um eine Energie bereitzustellen, die durch das mindestens eine energieverbrauchende abgesetzte Antenneneinheitsmodul verbraucht wird; und
Korrelieren der durch das mindestens eine energieverbrauchende abgesetzte Antenneneinheitsmodul verbrauchten Energie mit denjenigen der mindestens einen vorliegenden energieverbrauchenden abgesetzten Antenneneinheitsmodule, die vorhanden sind.

9. Abgesetzte Antenneneinheit nach einem der vorhergehenden Ansprüche, wobei der mindestens eine energiegespeiste Anschluss mehrere energiegespeiste Anschlüsse umfasst, und
wobei die Steuereinheit darüber hinaus dazu ausgelegt ist, mindestens einen ersten der mehreren energiegespeisten Anschlüsse zu sperren, wenn das verfügbare Energiebudget nur dazu ausreicht, der mindestens einen externen, energieverbrauchenden Vorrichtung Energie bereitzustellen, die an zumindest einen zweiten der mehreren energiegespeisten Anschlüsse angeschlossen ist.

10. Verfahren zum Verwalten von Energie, die an einer abgesetzten Antenneneinheit in einem verteilten Antennensystem verbraucht wird, **gekennzeichnet durch** die folgenden Verfahrensschritte:
Bestimmen eines verfügbaren Energiebudgets für mindestens einen energiegespeisten Anschluss, der dazu ausgelegt ist, mindestens einer an den mindestens einen energiegespeisten Anschluss (158(1) - 158 (Q) ) angeschlossenen externen, energieverbrauchenden Vorrichtung (156(1) - 156(Q)) auf Grundlage von Energie, die **durch** mindestens ein energieverbrauchendes abgesetztes Antenneneinheitsmodul (14) benötigt wird, Energie bereitzustellen; und
Freigeben von Energie für den mindestens einen energiegespeisten Anschluss, wenn das verfügbare Energiebudget zur Energiebereitstellung an die mindestens eine an den mindestens einen energiegespeisten Anschluss angeschlossene externe, energieverbrauchende Vorrichtung ausreicht, wobei das mindestens eine energieverbrauchende abgesetzte Antenneneinheitsmodul ein Funkfrequenzkommunikationsmodul, das zum Bereitstellen von Funkfrequenzkommunikationsdiensten ausgelegt ist, und/oder ein Digitaldatendienstmodul (154) umfasst, das zum Bereitstellen von Digitaldatendiensten ausgelegt ist.

11. Verfahren nach Anspruch 10, umfassend, dass der mindestens eine energiegespeiste Anschluss Energie empfängt, die dazu ausgelegt ist, der mindestens einen externen, energieverbrauchenden Vorrichtung bereitgestellt zu werden.

12. Verfahren nach einem der vorhergehenden Ansprüche, darüber hinaus umfassend, in mindestens einem optisch-elektrischen Umsetzer (30) ein optisches Downlink-Funkfrequenzkommunikationssignal in ein elektrisches Downlink-Funkfrequenzkommunikationssignal umzusetzen, und in mindestens einem elektrisch-optischen Umsetzer (34) ein elektrisches Uplink-Funkfrequenzkommunikationssignal in ein optisches Uplink-Funkfrequenzkommunikationssignal umzusetzen.

13. Verfahren nach Anspruch 12, darüber hinaus umfassend, dass:
das mindestens eine energieverbrauchende abgesetzte Antenneneinheitsmodul mindestens einem abgesetzten Erweiterungseinheitsmodul Funkfrequenzkommunikationsdienste bereitstellt,
Downlink-Funkfrequenzkommunikationssignale in dem mindestens einen abgesetzten Erweiterungseinheitsmodul empfangen werden, und
Uplink-Funkfrequenzkommunikationssignale in dem mindestens einen abgesetzten Erweiterungseinheitsmodul empfangen werden.

14. Verfahren nach Anspruch 12 oder 13, darüber hinaus umfassend, ein Lastabfühlsignal aus einem Lastdetektor bereitzustellen, das eine Gesamtenergie angibt, die durch das mindestens eine energieverbrauchende abgesetzte Antenneneinheitsmodul und die mindestens eine externe, energieverbrauchende Vorrichtung verbraucht wird.

15. Verfahren nach Anspruch 12, umfassend, die für das mindestens eine energieverbrauchende abgesetzte Antenneneinheitsmodul erforderliche Energie zu bestimmen, indem bestimmt wird, welche der mindestens in Einzahl vorliegenden energieverbrauchenden abgesetzten Antenneneinheitsmodule vorhanden sind.

## Revendications

1. Unité d'antenne distante pour un système d'antenne distribué, comprenant :
au moins un module d'unité d'antenne distante consommatrice de puissance (14) composé d'au moins un d'un module de communication par radiofréquence configuré pour fournir des services de communication par radiofréquence et d'un module de services de données numériques configuré pour fournir des services de données numériques,
au moins un port alimenté en puissance configuré pour fournir de la puissance à au moins un appareil consommateur de puissance externe (156(1) - 156(Q)) connecté à au moins un port alimenté en puissance (158(1) - 158(Q)) ; et **caractérisée en ce qu'**elle comprend en outre
une unité de commande configurée pour :
déterminer une quantité de puissance disponible pour l'au moins un port alimenté en puissance ; et
activer la puissance pour l'au moins un port alimenté en puissance si la quantité de puissance disponible est suffisante pour alimenter en puissance l'au moins un appareil consommateur de puissance externe connecté à l'au moins un port alimenté en puissance.

2. L'unité d'antenne distante de la revendication 1, dans laquelle l'unité de commande est le module de services de données numériques.

3. L'unité d'antenne distante selon l'une quelconque des revendications précédentes, dans laquelle l'au moins un port alimenté en puissance est configuré pour recevoir de la puissance configurée pour être fournie à l'au moins un appareil consommateur de puissance externe.

4. L'unité d'antenne distante selon l'une quelconque des revendications précédentes, dans laquelle l'au moins un module d'unité d'antenne distante consommatrice de puissance est composé d'au moins un convertisseur optique-électrique (30) configuré pour convertir un signal de communication par radiofréquence optique en liaison descendante en un signal de communication par radiofréquence électrique en liaison descendante, et dans laquelle l'au moins un module d'unité d'antenne distante consommatrice de puissance est composé d'au moins un convertisseur électrique-optique (34) configuré pour convertir un signal de communication par radiofréquence électrique en liaison montante en un signal de communication par radiofréquence optique en liaison montante.

5. L'unité d'antenne distante selon la revendication 4, dans laquelle l'au moins un module d'unité d'antenne distante consommatrice de puissance comprend en outre au moins un module d'unité d'expansion distante (160(1) - 160(X)) configuré pour fournir des services de communication par radiofréquence, sachant que l'au moins un module d'unité d'expansion distante est configuré pour recevoir des signaux de communication par radiofréquence en liaison descendante, et sachant que l'au moins un module d'unité d'expansion distante est configuré pour recevoir des signaux de communication par radiofréquence en liaison montante.

6. L'unité d'antenne distante selon la revendication 4, comprenant en outre un détecteur de charge (172) configuré pour fournir à l'unité de commande un signal de détection de charge indiquant une puissance totale consommée par l'au moins un module d'unité d'antenne distante consommatrice de puissance et l'au moins un appareil consommateur de puissance externe.

7. L'unité d'antenne distante selon la revendication 4, dans laquelle l'unité de commande est configurée pour déterminer la quantité de puissance disponible sur la base de la puissance requise par l'au moins un module d'unité d'antenne distante consommatrice de puissance, et dans laquelle l'unité de commande est configurée pour déterminer la puissance requise pour l'au moins un module d'unité d'antenne distante consommatrice de puissance en déterminant lesquels des au moins un modules d'unité d'antenne distante consommatrice de puissance sont présents.

8. L'unité d'antenne distante de la revendication 7, dans laquelle l'unité de commande est configurée pour déterminer lesquels des au moins un modules d'unité d'antenne distante consommatrice de puissance sont présents en :
soustrayant une puissance consommée par l'au moins un appareil consommateur de puissance externe connecté à l'au moins un port alimenté en puissance d'une puissance totale disponible pour fournir une puissance consommée par l'au moins un module d'antenne distante consommatrice de puissance ; et
mettre en corrélation la puissance consommée par l'au moins un module d'unité d'antenne distante consommatrice de puissance avec celles des au moins un modules d'unité d'antenne distante consommatrice de puissance qui sont présents.

9. L'unité d'antenne distante selon l'une quelconque des revendications précédentes, dans laquelle l'au moins un port alimenté en puissance est composé d'une pluralité de ports alimentés en puissance, et
dans laquelle l'unité de commande est en outre configurée pour désactiver au moins un premier port parmi la pluralité de ports alimentés en puissance si la quantité de puissance disponible est seulement suffisante pour alimenter en puissance l'au moins un appareil consommateur de puissance externe connecté à au moins un deuxième port parmi la pluralité de ports alimentés en puissance.

10. Procédé de gestion de puissance consommée au niveau d'une unité d'antenne distante dans un système d'antenne distribué, **caractérisé par** les étapes de procédé consistant à :
déterminer une quantité de puissance disponible pour au moins un port alimenté en puissance configuré pour fournir de la puissance à au moins un appareil consommateur de puissance externe (156(1) - 156(Q)) connecté à l'au moins un port alimenté en puissance (158(1) - 158(Q)) sur la base de puissance requise par au moins un module d'unité d'antenne distante consommatrice de puissance (14) ; et
activer de la puissance pour l'au moins un port alimenté en puissance si la quantité de puissance disponible est suffisante pour alimenter en puissance l'au moins un appareil consommateur de puissance externe connecté à l'au moins un port alimenté en puissance, sachant que l'au moins un module d'unité d'antenne distante consommatrice de puissance est composé d'au moins un d'un module de communication par radiofréquence configuré pour fournir des services de communication par radiofréquence et d'un module de services de données numériques (154) configuré pour fournir des services de données numériques.

11. Le procédé selon la revendication 10, comprenant l'au moins un port alimenté en puissance recevant de la puissance configurée pour être fournie à l'au moins un appareil consommateur de puissance externe.

12. Le procédé selon l'une quelconque des revendications de procédé précédentes, comprenant en outre la conversion d'un signal de communication par radiofréquence optique en liaison descendante en un signal de communication par radiofréquence électrique en liaison descendante dans au moins un convertisseur optique-électrique (30), et la conversion d'un signal de communication par radiofréquence électrique en liaison montante en un signal de communication par radiofréquence optique en liaison montante dans au moins un convertisseur électrique-optique (34).

13. Le procédé selon la revendication 12, comprenant en outre
l'au moins un module d'unité d'antenne distante consommatrice de puissance fournissant des services de communication par radiofréquence à au moins un module d'unité d'expansion distante,
la réception de signaux de communication par radiofréquence en liaison descendante dans l'au moins un module d'unité d'expansion distante, et
la réception de signaux de communication par radiofréquence en liaison montante dans l'au moins un module d'unité d'expansion distante.

14. Le procédé selon la revendication 12 ou 13, comprenant en outre la fourniture d'un signal de détection de charge provenant d'un détecteur de charge indiquant une puissance totale consommée par l'au moins un module d'unité d'antenne distante consommatrice de puissance et l'au moins un appareil consommateur de puissance externe.

15. Le procédé selon la revendication 12, comprenant la détermination de la puissance requise pour l'au moins un module d'unité d'antenne distante consommatrice de puissance en déterminant lesquels des au moins un modules d'unité d'antenne distante consommatrice de puissance sont présents.
